# EUROPEAN PATENT SPECIFICATION

(11) **EP 4 418 493 B1**
(45) Date of publication and mention of the grant of the patent: **28.10.2026**
(21) Application number: 23809946.9
(22) Date of filing: 29.11.2023
(51) Int. Cl.: G06T 7/70, H02J 50/10, H02J 50/12, H02J 50/80, H02J 50/90, H04M 1/72409, H04M 1/72454, H04M 1/04, H04M 1/72412

(54) **ELECTRONIC DEVICE FOR RECEIVING POWER WIRELESSLY AND OPERATION METHOD THEREFOR**
ELEKTRONISCHE VORRICHTUNG ZUM DRAHTLOSEN EMPFANGEN VON STROM UND BETRIEBSVERFAHREN DAFÜR
DISPOSITIF ÉLECTRONIQUE DE RÉCEPTION D'ÉNERGIE SANS FIL ET SON PROCÉDÉ DE FONCTIONNEMENT

(30) Priority: 30.11.2022 KR 20220164668; 05.01.2023 KR 20230001711
(43) Date of publication of application: 21.08.2024
(73) Proprietor: Samsung Electronics Co., Ltd., Suwon-si, Gyeonggi-do 16677 (KR)
(72) Inventor: SONG, Mingi, Suwon-si Gyeonggi-do 16677 (KR); YUN, Yongsang, Suwon-si Gyeonggi-do 16677 (KR); LEE, Kwangyeol, Suwon-si Gyeonggi-do 16677 (KR)
(74) Representative: Gulde & Partner
(86) International application number: PCT/KR2023/019466
(87) International publication number: WO 2024/117780

(56) References cited:
- EP-A2- 2 753 000
- KR-A- 20210 120 378
- KR-A- 20220 086 882
- KR-A- 20220 110 965
- KR-B1- 102 388 644
- US-A1- 2016 094 076
- US-A1- 2016 094 076

## Description

### [Technical Field]

Various embodiments of the disclosure relate to an electronic device for wirelessly receiving power and a method of operating the same.

### [Background Art]

Along with the development of wireless charging technology, methods of supplying power to a variety of electronic devices and charging them by a single charging device are under study. This wireless charging technology utilizes wireless power transmission and/or reception. For example, it is a system that allows an electronic device to automatically charge its battery by simply placing the electronic device on a charging device (e.g., a charging pad) without connecting the electronic device to the charging device by a separate charging connector.

The wireless charging technology includes an electromagnetic induction scheme, a resonance scheme using resonance, and a radio frequency (RF)/microwave radiation scheme of converting electrical energy into microwaves and transferring the microwaves.

A power transmission method based on wireless charging is to transmit power through a first coil of a transmitting end and a second coil of a receiving end. As the transmitting end generates a magnetic field, and a current is induced or resonated according to a change in a magnetic field at the receiving end, energy may be generated.

In a wireless power transmission scheme based on electromagnetic induction, power is transmitted using an electromagnetic field induced to a coil. A wireless power transmission device generates an electromagnetic field by applying a current to a transmission coil, and an induced electromotive force is formed in a reception coil of a wireless power reception device by the generated electromagnetic field. Therefore, power may be transmitted wirelessly.

US 2016/094076 A1 discloses electronic devices which may display graphical output that may include or indicate an alignment condition between electronic devices, which may be used to assist or guide the alignment of the two electronic devices.

EP 2 753 000 A2 discloses an electronic device receiving information about a plurality of wireless charging pads and displaying the information about the plurality of wireless charging pads on a screen of the electronic device in the form of a geographical map.

### [Disclosure of Invention]

### [Solution to Problems]

The invention is defined by the appended claims. The description that follows is subjected to this limitation. Any disclosure lying outside the scope of said claims is only intended for illustrative as well as comparative purposes.

A first electronic device according to an embodiment includes a power reception circuit including a first coil, a sensor, a display , a processor , and memory 230 storing instructions. According to an embodiment, the instructions, when executed by the processor, may cause the electronic device (201) to , when the first electronic device is mounted on a second electronic device wirelessly transmitting power, receive identification information from a second coil transmitting power to the first coil among at least one coil included in the second electronic device. According to an embodiment, the instructions, when executed by the processor, may cause the electronic device to identify a type of the second electronic device and a position of the second coil, based on the identification information. According to an embodiment, the instructions, when executed by the processor, may cause the electronic device to obtain a first image representing the first electronic device, based on a state of the first electronic device identified by the sensor. According to an embodiment, the instructions, when executed by the processor, may cause the electronic device to obtain a second image representing the second electronic device, based on the type of the second electronic device. According to an embodiment, the instructions, when executed by the processor, may cause the electronic device to identify a mounted state of the first electronic device on the second electronic device. According to an embodiment, the instructions, when executed by the processor, may cause the electronic device to display, on the display, mounting information indicating a state in which the first electronic device is mounted on the second electronic device, based on the first image, the second image, and the mounted state of the first electronic device on the second electronic device.

A method of operating a first electronic device according to an embodiment includes, when the first electronic device is mounted on a second electronic device wirelessly transmitting power, receiving identification information from a second coil transmitting power to a first coil included in the first electronic device, among at least one coil included in the second electronic device. The method of operating the first electronic device includes identifying a type of the second electronic device and a position of the second coil, based on the identification information. The method of operating the first electronic device includes obtaining a first image representing the first electronic device, based on a state of the first electronic device identified through a sensor included in the first electronic device. The method of operating the first electronic device includes obtaining a second image representing the second electronic device, based on the type of the second electronic device. The method of operating the first electronic device includes identifying a mounted state of the first electronic device on the second electronic device. The method of operating the first electronic device includes displaying, on a display included in the first electronic device, mounting information indicating a state in which the first electronic device is mounted on the second electronic device, based on the first image, the second image, and the mounted state of the first electronic device on the second electronic device.

### [Brief Description of Drawings]

FIG. 1 is a block diagram illustrating an electronic device for wirelessly transmitting power (hereinafter, referred to as a wireless power transmission device) and an electronic device for wirelessly receiving power (hereinafter, referred to as a wireless power reception device) according to an embodiment.
FIG. 2A is a diagram illustrating a wireless power transmission device and a wireless power reception device according to an embodiment.
FIG. 2B is a block diagram illustrating configurations of a wireless power transmission device and a wireless power reception device according to an embodiment.
FIG. 2C is a diagram illustrating an operation of transmitting identification information assigned to each of a plurality of coils included in a wireless power transmission device according to an embodiment.
FIG. 3 is a flowchart illustrating a method of providing mounting information indicating a mounted state of an electronic device on a wireless power transmission device in the electronic device according to an embodiment.
FIG. 4 is a flowchart illustrating a method of generating mounting information indicating a mounted state of an electronic device on a wireless power transmission device in the electronic device according to an embodiment.
FIG. 5 is a flowchart illustrating a method of providing information for guiding movement of a mounted position based on the magnitude of power received from a wireless power transmission device in an electronic device according to an embodiment.
FIG. 6 is a flowchart illustrating a method of providing information for guiding movement of a mounted position based on a temperature in an electronic device according to an embodiment.
FIG. 7 is a flowchart illustrating a method of providing objects representing relative positions of a first coil and a second coil in an electronic device according to an embodiment.
FIGS. 8A, 8B, 8C, and 8D are diagrams illustrating a method of providing mounting information indicating a mounted state of an electronic device on a wireless power transmission device and information for guiding movement of a mounted position in the electronic device according to an embodiment.
FIGS. 9A, 9B, 9C, and 9D are diagrams illustrating a method of providing mounting information indicating a mounted state of a foldable electronic device on a pad-type wireless power transmission device and information for guiding movement of a mounted position in the foldable electronic device according to an embodiment.
FIGS. 10A and 10B are diagrams illustrating a method of providing mounting information indicating a mounted state of a foldable electronic device on a pad-type wireless power transmission device in the foldable electronic device according to an embodiment.
FIGS. 11A, 11B, 11C, and 11D are diagrams illustrating a method of providing mounting information indicating a mounted state of a foldable electronic device on a stand-type wireless power transmission device and information for guiding movement of a mounted position in the foldable electronic device according to an embodiment.
FIGS. 12A and 12B are diagrams illustrating a method of providing mounting information indicating a mounted state of a foldable electronic device on a stand-type wireless power transmission device in the foldable electronic device according to an embodiment.
FIGS. 13A, 13B, 13C, and 13D are diagrams illustrating a method of providing mounting information indicating a mounted state of a rollable electronic device on a stand-type wireless power transmission device and information for guiding movement of a mounted position in the rollable electronic device according to an embodiment.
FIG. 14 is a diagram illustrating a network environment according to various embodiments.

### [Mode for the Invention]

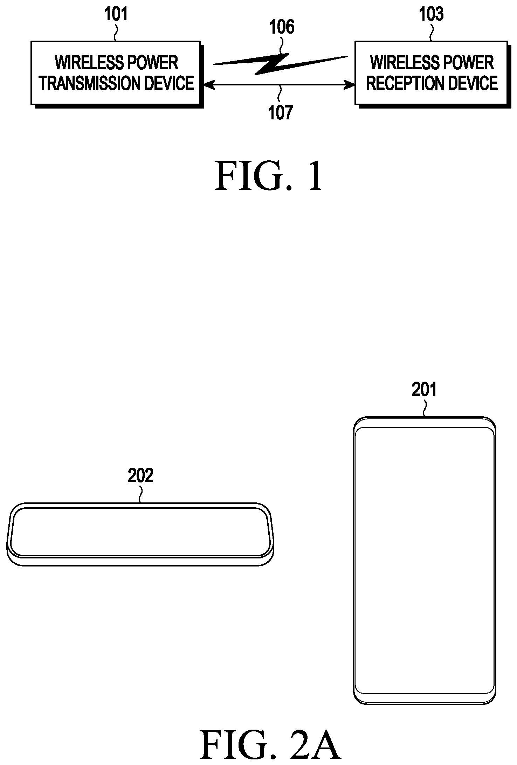

FIG. 1 is a block diagram illustrating an electronic device for wirelessly transmitting power (hereinafter, referred to as a wireless power transmission device) and an electronic device for wirelessly receiving power (hereinafter, referred to as a wireless power reception device) according to an embodiment.

Referring to FIG. 1, a wireless power transmission device 101 according to an embodiment may wirelessly transmit power 106 to a wireless power reception device 103. Alternatively, the wireless power transmission device 101 may receive information 107 from the wireless power reception device 103. In an example, the wireless power transmission device 101 may transmit the power 106 according to an induction scheme. When the wireless power transmission device 101 operates according to the induction scheme, the wireless power transmission device 101 may include, for example, at least one of a power source, a direct current-direct current (DC/DC) conversion circuit (e.g., a DC/DC converter), a direct current-alternating current (DC-AC) conversion circuit (e.g., an inverter), an amplifier circuit, an impedance matching circuit, at least one capacitor, at least one coil, or a communication modulation circuit. At least one capacitor together with at least one coil may form a resonant circuit. In an embodiment, the wireless power transmission device 101 may be implemented in a manner defined in the Qi standard of the wireless power consortium (WPC). The wireless power transmission device 101 may include a coil capable of generating an induced magnetic field, when current flows according to the induction scheme. The process of generating an induced magnetic field by the wireless power transmission device 101 may be expressed as wireless transmission of the power 106 from the wireless power transmission device 101. In addition, a coil in the wireless power reception device 103 may generate an induced electromotive force (or current, voltage, and/or power) by a magnetic field formed around the coil. The process of generating an induced electromotive force through the coil of the wireless power reception device 103 may be expressed as wireless reception of the power 106 at the wireless power reception device 103.

The wireless power transmission device 101 according to various embodiments may communicate with the wireless power reception device 103. For example, the wireless power transmission device 101 may communicate with the wireless power reception device 103 according to an in-band scheme. The wireless power transmission device 101 may modulate data to be transmitted according to, for example, a frequency shift keying (FSK) modulation scheme, and the wireless power reception device 103 may provide the information 107 by performing modulation according to an amplitude shift keying (ASK) modulation scheme. The wireless power transmission device 101 may identify the information 107 provided by the wireless power reception device 103 based on the amplitude of current and/or a voltage applied to the transmission coil. While the wireless power reception device 103 is shown in FIG. 1 as transmitting the information 107 directly to the wireless power transmission device 101, this is only for easy understanding, and those skilled in the art will understand that the wireless power reception device 103 controls only on/off of at least one switch inside it. The operation of performing modulation based on the ASK modulation scheme and/or the FSK modulation scheme may be understood as an operation of transmitting data (or a packet) according to the in-band communication scheme, and an operation of performing demodulation based on an ASK demodulation scheme and/or an FSK demodulation scheme may be understood as an operation of receiving data (or a packet) according to the in-band communication scheme.

In this document, when it is said that the wireless power transmission device 101 or the wireless power reception device 103 performs a specific operation, this may imply that various hardware included in the wireless power transmission device 101 or the wireless power reception device 103, for example, a controller (e.g., a micro controlling unit (MCU), a field programmable gate array (FPGA), an application specific integrated circuit (ASIC), a microprocessor, or an application processor (AP)) performs the specific operation. Alternatively, when it is said that the wireless power transmission device 101 or the wireless power reception device 103 performs a specific operation, this may imply that the controller controls other hardware to perform the specific operation. Alternatively, when it is said that the wireless power transmission device 101 or the wireless power reception device 103 performs a specific operation, this may also imply that when executed, at least one instruction for performing the specific operation, stored in a storage circuit (e.g., memory) of the wireless power transmission device 101 or the wireless power reception device 103, causes the controller or other hardware to perform the specific operation.

FIG. 2A is a diagram illustrating an electronic device for wirelessly transmitting power and an electronic device for wirelessly receiving power according to an embodiment.

Referring to FIG. 2A, according to an embodiment, a first electronic device 201 for wirelessly receiving power may wirelessly receive power from a second electronic device 202 for wirelessly transmitting power. For example, the first electronic device 201 may be implemented the same as or similar to the wireless power reception device 103 of FIG. 1. The second electronic device 202 may be implemented the same as or similar to the wireless power transmission device 101 of FIG. 1.

According to an embodiment, the first electronic device 201 may be implemented as various types of electronic devices (e.g., a smartphone). For example, the first electronic device 201 may be a bar-type electronic device. Alternatively, the first electronic device 201 may be a foldable or rollable electronic device. When the first electronic device 201 is a foldable electronic device, the first electronic device 201 may be mounted on the second electronic device 202 in an unfolded or folded state of a flexible display. Alternatively, when the first electronic device 201 is a rollable electronic device, the first electronic device 201 may be mounted on the second electronic device 202 in an unfolded or folded state of a slidable display.

According to an embodiment, the second electronic device 202 may be implemented in a form that allows the first electronic device 201 to be mounted thereon. For example, the second electronic device 202 may be implemented in the form of a pad that allows the first electronic device 201 to be placed on the second electronic device 202. Alternatively, the second electronic device 202 may be implemented in the form of a stand on which the first electronic device 201 may be mounted. When the first electronic device 201 is mounted on the second electronic device 202, the second electronic device 202 may wirelessly transmit power to the first electronic device 201.

The shapes of the first electronic device 201 and the second electronic device 202 shown in FIG. 2A are exemplary only, to which the technical idea of the disclosure is not limited. For example, the first electronic device 201 and the second electronic device 202 may be implemented in various shapes.

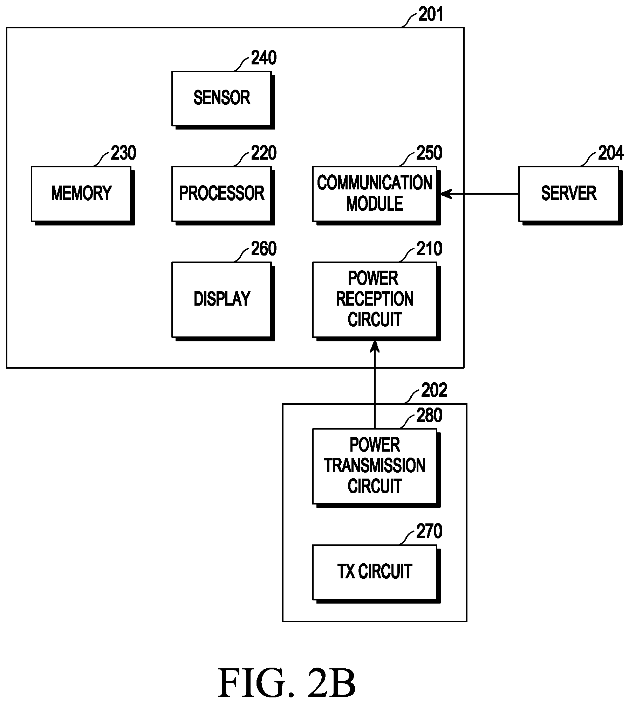

FIG. 2B is a block diagram illustrating configurations of a wireless power transmission device and a wireless power reception device according to an embodiment.

Referring to FIG. 2B, according to an embodiment, the second electronic device 202 may include a transmission (TX) circuit 270 and a power transmission circuit 280.

According to an embodiment, the TX circuit 270 may provide power provided by a power source to a specific coil of at least one coil included in the power transmission circuit 280. According to an embodiment, the TX circuit 270 may include a power source (not shown), a DC/DC converter (not shown), and an inverter (not shown). For example, the power source may include at least one of an interface for connecting to an external travel adapter (TA), a battery (not shown) of the second electronic device 202, a charger (not shown), or a power management integrated circuit (PMIC) (not shown). According to an embodiment, power provided by the power source may be provided to the DC/DC converter. Although the power source may provide, for example, DC power to the DC/DC converter, the type of the provided power is not limited. The DC/DC converter may convert the voltage of the provided power and provide the converted voltage to the inverter. The DC/DC converter may change the voltage of the received DC power and provide DC power with the changed voltage (or a driving voltage VDD) to the inverter. The DC/DC converter may perform, for example, buck conversion and/or boost conversion. However, those skilled in the art will understand that the type of the DC/DC converter is not limited. The inverter may output AC power using the driving voltage provided by the DC/DC converter. For example, the inverter may include a plurality of switches that may form a full bridge circuit, and the number of switches or the type of the bridge circuit is not limited.

According to an embodiment, AC power generated by the TX circuit 270 may be applied to a specific coil of the at least one coil included in the power transmission circuit 280. The specific coil included in the power transmission circuit 280 may form a magnetic field based on the applied AC power. A portion of the magnetic field (or magnetic flux) formed by the specific coil included in the power transmission circuit 280 may pass across a cross-section of a coil included in a power reception circuit 210 of the first electronic device 201. As the magnetic field across the cross-section of the coil of the first electronic device 201 changes over time, an induced electromotive force (e.g., current, voltage, or power) may be generated in the coil included in the power reception circuit 210 of the first electronic device 201.

According to an embodiment, the power transmission circuit 280 may include at least one coil. For convenience of description, a coil included in the power transmission circuit 280 may be defined as a transmission coil. The second electronic device 202 may assign identification information to the at least one transmission coil. For example, when the power transmission circuit 280 includes a plurality of transmission coils, the second electronic device 202 may transmit power through at least one of the plurality of transmission coils. At this time, the second electronic device 202 may transmit identification information assigned to the transmission coil transmitting the power to the first electronic device 201. For example, the identification information may be information for identifying the type, shape, and/or transmission coil of the second electronic device 202. For example, the identification information may include information indicating "a wireless power transmitter" including the transmission coil and "the number of the transmission coil".

According to an embodiment, the first electronic device 201 may include the power reception circuit 210, a processor 220, memory 230, a sensor 240, a communication module 250, and a display 260.

According to an embodiment, the power reception circuit 210 may include a coil. The power reception circuit 210 may receive power transmitted from the second electronic device 202 through the coil. For example, the coil may generate an induced electromotive force (e.g., current, voltage, or power). Current may be conducted in the coil based on the induced electromotive force generated in the coil. The first electronic device 201 may perform a charging operation based on the conducted current.

According to an embodiment, the processor 220 may provide overall control to operations of the first electronic device 201.

According to an embodiment, the processor 220 may identify whether the first electronic device 201 has been mounted on the second electronic device 202 that wirelessly transmits power. When the first electronic device 201 has been mounted on the second electronic device 202 that wirelessly transmits power, a charging operation may be performed. When the first electronic device 201 is mounted on the second electronic device 202 that wirelessly transmits power, the processor 220 may receive, from the second electronic device 202, and identify identification information of a transmission coil that transmits power to the power reception circuit 210 (or a coil included in the power reception circuit 210) among at least one transmission coil included in the second electronic device 202. For example, the identification information may be received in an in-band scheme. For example, the identification information, which is information assigned to the transmission coil, may include information identifying the transmission coil.

According to an embodiment, the processor 220 may identify the type of the second electronic device 202 and the position of the transmission coil, based on the identification information. For example, the processor 220 may identify the type and/or shape of a wireless charger serving as the second electronic device 202. For example, the processor 220 may identify whether the second electronic device 202 is a charger including multiple coils or a charger including a single coil. Further, the processor 220 may identify whether the second electronic device 202 is a pad-type charger or a stand-type charger. When the second electronic device 202 includes multiple coils, the processor 220 may identify the position of the transmission coil among the transmission coils included in the second electronic device 202 (or the row and column of the transmission coil when the transmission coils are arranged in a plurality of rows and columns (e.g. 2*2 or 3*3)). The processor 220 may identify the position of the transmission coil based on the number of the transmission coil.

According to an embodiment, the processor 220 may identify the state of the first electronic device 201. For example, the sensor 240 may include a temperature sensor that senses the temperature of the first electronic device 201. For example, the processor 220 may identify the temperature of the first electronic device 201 through the sensor 240. Additionally, the sensor 240 may include various sensors (e.g., a magnetic sensor or a pressure sensor) to identify the state of the first electronic device 201. For example, when the first electronic device 201 includes a foldable display, the processor 220 may identify whether the foldable display is in a folded or unfolded state, through the sensor 240. Alternatively, when the first electronic device 201 includes a rollable display, the processor 220 may identify whether the rollable display is in an extended state or a retracted state, through the sensor 240.

According to an embodiment, the processor 220 may identify a mounted state of the first electronic device 201 through the sensor 240. For example, the sensor 240 may include an accelerometer and/or a gyro sensor. For example, the mounted state may refer to whether the first electronic device 201 is mounted in a horizontal or vertical direction. For example, the processor 220 may identify whether the first electronic device 201 is mounted in the horizontal or vertical direction through the acceleration sensor and/or the gyro sensor included in the sensor 240.

According to an embodiment, when the first electronic device 201 is a foldable electronic device, the processor 220 may detect folding or unfolding of a hinge portion through the sensor 240. The processor 220 may also detect an angle between housings (or hinges) of the first electronic device 201. In this case, the mounted state may refer to whether the first electronic device 201 is mounted in the unfolded or folded state. Alternatively, the mounted state may refer to whether the first electronic device 201 is mounted in an unfolded or folded state at a corresponding angle (e.g., the first electronic device 201 is mounted in a slightly unfolded or slightly folded state), based on the angle between the housings (or hinges) of the first electronic device 201.

According to an embodiment, when the first electronic device 201 is a rollable electronic device, the processor 220 may detect whether a rollable display is slidable, through the sensor 240. In this case, the mounted state may refer to whether the rollable display is mounted in the retracted or extended state.

According to an embodiment, the processor 220 may obtain a first image representing the first electronic device 201 based on the identified mounted state of the first electronic device 201. For example, the first image may be pre-stored in the memory 230. When the first image is not pre-stored in the memory 230, the processor 220 may obtain the first image from the server 204 through the communication module 250. For example, the first image may be an image that may represent the mounted state of the first electronic device 201 among a plurality of images representing the first electronic device 201. The processor 220 may select or obtain the first image that may represent the mounted state of the first electronic device 201 from among the plurality of images representing the first electronic device 201. For example, the first image may be changed according to the mounted state of the first electronic device 201. For example, the first image may be an image in which the first electronic device 201 is oriented in either the horizontal direction or the vertical direction. For example, when the first electronic device 201 includes a foldable display, the first image may be an image representing the folded state or unfolded state of the foldable display. **In** this case, the first image may vary depending on an extent to which the foldable display is unfolded or folded. For example, when the first electronic device 201 includes a rollable display, the first image may be an image representing the retracted state or extended state of the rollable display. In this case, the first image may vary depending on an extent to which the rollable display is retracted or extended.

According to an embodiment, the processor 220 may obtain a second image representing the second electronic device 202 based on the type of the second electronic device 202. For example, the second image may be pre-stored in the memory 230. When the second image is not pre-stored in the memory 230, the processor 220 may obtain the second image from a server 204 through the communication module 250. For example, when the first electronic device 201 is mounted on the second electronic device 202, the first electronic device 201 may receive identification information of the second electronic device 202 from the second electronic device 202. Then, the first electronic device 201 may obtain the second image from the server 204 based on the identification information of the second electronic device 202. Alternatively, the processor 220 may obtain the second image directly from the second electronic device 202. For example, the second image may be a representative image of the second electronic device 202. For example, when the second electronic device 202 is a pad-type charger, the second image may be an image representing the pad-type charger. Alternatively, when the second electronic device 202 is a stand-type charger, the second image may be an image representing the stand-type charger.

According to an embodiment, the processor 220 may identify the position of the transmission coil, indicated by the identification information. For example, the processor 220 may identify the number of the transmission coil indicated by the identification information among the at least one transmission coil included in the second electronic device 202. The processor 220 may identify a position where the first electronic device 201 is mounted on the second electronic device 202, based on the position of the coil indicated by the identification information. For example, the processor 220 may identify that the first electronic device 201 (or a coil included in the first electronic device 201) is mounted in an area adjacent to the transmission coil.

According to an embodiment, the processor 220 may generate mounting information indicating the mounted state or position of the first electronic device 201 on the second electronic device 202, based on the first image, the second image, and the position where the first electronic device 201 is mounted on the second electronic device 202. The processor 220 may display the generated mounting information on the display 260. For example, the processor 220 may generate or obtain mounting information in which the first image representing the first electronic device 201 is overlapped in an area corresponding to the mounted position of the first electronic device 201 on the second electronic device 202 in the second image representing the second electronic device 202. The processor 220 may display at least one coil image representing the at least one coil included in the second electronic device 202 by overlapping the at least one coil image on the second image. In this case, the at least one coil image may be displayed in an area corresponding to a position where the at least one coil is disposed in the second electronic device 202. For example, information about the at least one coil included in the second electronic device 202 (e.g., information about the position of the coil and an image representing the coil) may be pre-stored in the memory of the first electronic device 201. Alternatively, the first electronic device 201 may receive the information about the at least one coil included in the second electronic device 202 from the server 204 or the second electronic device 202. Further, the processor 220 may display a coil image representing the coil included in the power reception circuit by overlapping the coil image on the first image. In this case, the coil image may be displayed in an area corresponding to a position where the coil is disposed in the first electronic device. Accordingly, the user may identify whether the first electronic device 201 has been mounted normally on the second electronic device 202.

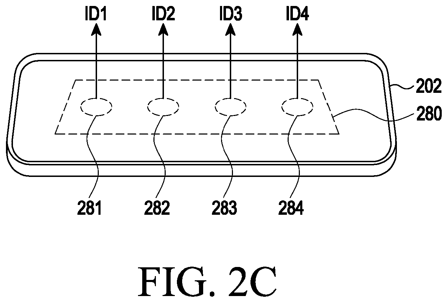

FIG. 2C is a diagram illustrating an operation of transmitting identification information assigned to each of a plurality of coils included in a wireless power transmission device according to an embodiment.

Referring to FIG. 2C, the second electronic device 202 may include a plurality of transmission coils 281, 282, 283, and 284, according to an embodiment. For example, the power transmission circuit 280 may include the plurality of transmission coils 281, 282, 283, and 284.

According to an embodiment, unique identification information may be assigned to each of the plurality of transmission coils 281, 282, 283, and 284. For example, the identification information may refer to information identifying the corresponding coil and the position of the coil. For example, the first transmission coil 281 may be assigned first identification information ID1, the second transmission coil 282 may be assigned second identification information ID2, the third transmission coil 283 may be assigned third identification information ID3, and the fourth transmission coil 284 may be assigned fourth identification information ID4.

According to an embodiment, a transmission coil aligned with the coil of the first electronic device 201 among the plurality of transmission coils 281, 282, 283, and 284 may transmit power to the first electronic device 201 (or the coil included in the first electronic device 201). The transmission coil may transmit its assigned identification information to the first electronic device 201. For example, when the first transmission coil 281 transmits power to the first electronic device 201, the first identification information ID1 may also be transmitted. When the second transmission coil 282 transmits power to the first electronic device 201, the second identification information ID2 may also be transmitted. When the third transmission coil 283 transmits power to the first electronic device 201, the third identification information ID3 may also be transmitted. When the fourth transmission coil 284 transmits power to the first electronic device 201, the fourth identification information ID4 may also be transmitted. This allows the first electronic device 201 to identify where it is located in a mounting area of the second electronic device 202, based on the received identification information. Further, the first electronic device 201 may obtain mounting information indicating the mounted state or position of the first electronic device 201 on the second electronic device 202, based on a result of the identification.

In FIG. 2C, the plurality of transmission coils 281, 282, 283, and 284 may be disposed inside a housing of the second electronic device 202. However, the number, shapes, and/or disposed positions of the plurality of transmission coils 281, 282, 283, and 284 are merely exemplary, and the technical idea of the disclosure may not be limited thereto. For example, depending on implementation, the second electronic device 202 may include only a single transmission coil.

At least some of the operations performed by the first electronic device 201 described below may be performed by the processor 220. However, for ease of description, the operations will be described as being performed by the first electronic device 201.

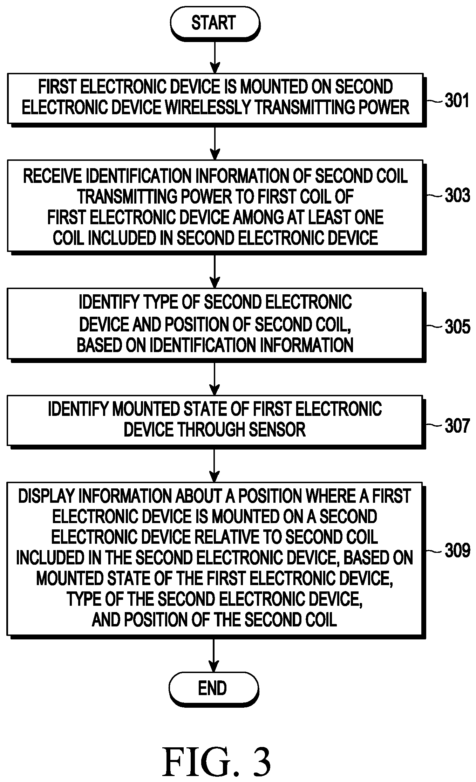

FIG. 3 is a flowchart illustrating a method of providing mounting information indicating the mounted state of an electronic device on a wireless power transmission device according to an embodiment.

Referring to FIG. 3, according to an embodiment, a first electronic device (e.g., the first electronic device 201 of FIG. 2B) may be mounted on a second electronic device (e.g., the second electronic device 202 of FIG. 2B) that wirelessly transmits power in operation 301. For example, the first electronic device 201 may be mounted in a mounting area of the second electronic device 202 (e.g., a mounting area of a pad or a mounting area of a stand). The first electronic device 201 may then wirelessly receive power from the second electronic device 202.

According to an embodiment, in operation 303, the first electronic device 201 may receive identification information (e.g., identification information designated (or assigned) to a second coil) from the second coil (e.g., a transmission coil) transmitting power to a first coil of the first electronic device among at least one coil (e.g., the transmission coils 281, 282, 283, and 284 of FIG. 3) included in the second electronic device 202. The first coil may refer to a coil included in the power reception circuit (e.g., the power reception circuit 210 of FIG. 2B) of the first electronic device 201, and the second coil may refer to any one of the transmission coils (e.g., 281, 282, 283, and 284 in FIG. 2C) included in the power transmission circuit (e.g., the power transmission circuit 280 of FIG. 2B) of the second electronic device 202.

According to an embodiment, in operation 305, the first electronic device 201 may identify the type of the second electronic device and the position of the second coil based on the identification information. For example, the first electronic device 201 may identify whether the second electronic device 202 is a charger with multiple coils or a charger with a single coil. Further, the first electronic device 201 may identify whether the second electronic device 202 is a pad-type charger or a stand-type charger. For example, the first electronic device 201 may identify the position of the first electronic device 201 in the mounting area of the second electronic device 202 based on the number, shape, and/or disposed position of the at least one coil included in the second electronic device and the position of the second coil transmitting power to the first electronic device 201.

According to an embodiment, in operation 307, the first electronic device 201 may identify the state (or mounted state) of the first electronic device 201 through the sensor (e.g., the sensor 240 of FIG. 2B). The first electronic device 201 may also identify the state of the first electronic device (e.g., whether a foldable display is in the unfolded or folded state) through the sensor 240. For example, the first electronic device 201 may identify whether the first electronic device 201 is mounted in the horizontal or vertical direction, whether the first electronic device 201 is mounted with the foldable display unfolded or folded, or whether the first electronic device 201 is mounted with a rollable display retracted or extended.

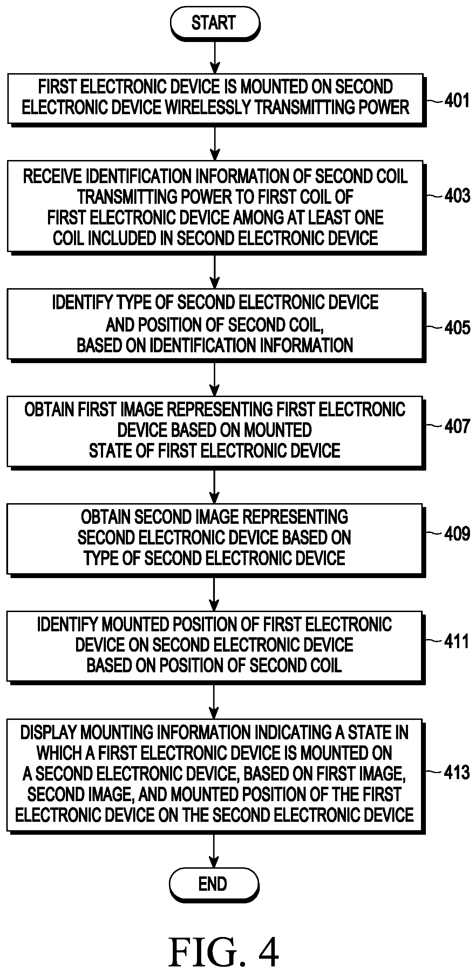

According to an embodiment, in operation 309, the first electronic device 201 may display, on the display (e.g., the display 260 of FIG. 2B), information about a position where the first electronic device 201 is mounted on the second electronic device 202 relative to the second coil included in the second electronic device 202, based on the mounted state of the first electronic device 201, the type of the second electronic device 202, and the position of the second coil. A method of generating information about the mounted position of the first electronic device 201 on the second electronic device 202 will be described below in more detail with reference to FIG. 4.

FIG. 4 is a flowchart illustrating a method of generating mounting information indicating the mounted state of an electronic device on a wireless power transmission device according to an embodiment.

Referring to FIG. 4, according to an embodiment, in operation 401, a first electronic device (e.g., the electronic device 201 of FIG. 2B) may be mounted on a second electronic device (e.g., the electronic device 202 of FIG. 2B) that wirelessly transmits power. The first electronic device 201 may then receive power wirelessly from the second electronic device 202.

According to an embodiment, in operation 403, the first electronic device 201 may receive identification information of a second coil (e.g., a transmission coil) transmitting power to a first coil of the first electronic device among the at least one coil (e.g., the transmission coils 281, 282, 283, and 284 of FIG. 3) included in the second electronic device 202. The first coil may refer to a coil included in the power reception circuit (e.g., the power reception circuit 210 in FIG. 2B) of the first electronic device 201, and the second coil may refer to any one of the transmission coils 281, 282, 283, and 284 included in the power transmission circuit (e.g., the power transmission circuit 280 of FIG. 2B) of the second electronic device 202.

According to an embodiment, in operation 405, the first electronic device 201 may identify the type of the second electronic device 201 and the position of the second coil (e.g., the transmission coil transmitting power among the transmission coils 281, 282, 283, and 284) based on the identification information. For example, the identification information may further include ID information indicating the type (e.g., product information) of the second electronic device 201 together with information about the second coil.

According to an embodiment, in operation 407, the first electronic device 201 may identify the mounted state of the first electronic device 201 and/or the state of the first electronic device 201 through the sensor (e.g., the sensor 240 of FIG. 2B), and obtain a first image representing the first electronic device 201 based on the mounted state and/or state of the first electronic device 201. For example, the first image may be an image representing the mounted state of the first electronic device 201 among a plurality of images representing the first electronic device 201. For example, the first image may be pre-stored in the first electronic device 201. Alternatively, the first image may be obtained through an external electronic device (e.g., the server 204 of FIG. 2B).

According to an embodiment, in operation 409, the first electronic device 201 may obtain a second image representing the second electronic device 202 based on the type of the second electronic device 201. For example, the second image may be a representative image of the second electronic device 202. For example, the second image may be pre-stored in the first electronic device 201. Alternatively, the second image may be obtained from the second electronic device 202 or obtained through an external electronic device (e.g., the server 204 of FIG. 2B).

According to an embodiment, in operation 411, the first electronic device 201 may identify the mounted position or state of the first electronic device 201 on the second electronic device 202 based on the position of the second coil. For example, when the second electronic device 202 includes a plurality of coils, the first electronic device 201 may identify whether the first coil is aligned with the second coil based on the efficiency of the power received from the second coil. The first electronic device 201 may estimate the mounted position of the first electronic device 201 on the second electronic device 202 based on the position of the second coil.

According to an embodiment, in operation 413, the first electronic device 201 may generate and display mounting information indicating a state in which the first electronic device 201 is mounted on the second electronic device 202 based on the first image, the second image, and the mounted position of the first electronic device 201 on the second electronic device 202. The mounting information may include an image in which the first image is overlapped on the second image. For example, the first electronic device 201 may overlap the first image in an area corresponding to the mounted position of the first electronic device 201 on the second electronic device 202 in the second image. For example, the first electronic device 201 may overlap the first image on top of the second image that includes coil images representing the transmission coils 281, 282, 283, and 284 included in the second electronic device 202. In this case, the first image may include a coil image representing the first coil. For example, the coil image representing the first coil may be displayed to be distinguished from the coil images representing the transmission coils 281, 282, 283, and 284 (e.g., by color, brightness, and/or shading). The first electronic device 201 may display the mounting information generated according to the method described above on the display (e.g., the display 260 of FIG. 2B). This allows a user to visually compare the position of the first coil of the first electronic device 201 with the positions of the transmission coils included in the second electronic device 202. Further, the user may identify whether the first coil of the first electronic device 201 is correctly aligned with the transmission coils 281, 282, 283, and 284 included in the second electronic device 202.

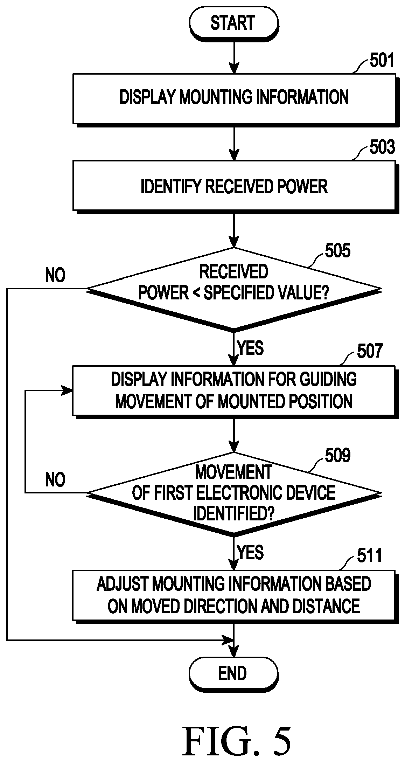

FIG. 5 is a flowchart illustrating a method of providing information for guiding movement of a mounted position based on the magnitude of power received from a wireless power transmission device in an electronic device according to an embodiment.

Referring to FIG. 5, according to an embodiment, a first electronic device (e.g., the first electronic device 201 of FIG. 2B) may display mounting information on a display (e.g., the display 260 of FIG. 2B) in operation 501. For example, the mounting information may refer to information indicating the mounted state and position of the first electronic device 201 on the second electronic device 202. The mounting information may include a first image representing the first electronic device 201 and a second image representing the second electronic device 202.

In operation 503, according to an embodiment, the first electronic device 201 may identify power received from the second electronic device 202. In operation 505, the first electronic device 201 may identify whether the received power is less than a specified value. For example, the specified value may be the value of power that may be received when a first coil of the first electronic device 201 and a transmission coil of the second electronic device 202 are normally aligned. For example, the specified value may be changed based on the charged state of the battery included in the first electronic device 201 (or the amount of power stored in the battery). For example, the first electronic device 201 may have a different value of power received depending on the level of power stored in the battery. In this case, the specified value may be changed based on the level of power stored in the battery. For example, when the battery included in the first electronic device 201 is in a second charged state higher than a first charged state, the specified value may be lower than a specified value in the first charge state.

According to an embodiment, when identifying that the received power is not less than the specified value (no in operation 505), the first electronic device 201 may perform a charging operation while continuing to display the mounting information. For example, when identifying that the received power is not less than the specified value, the first electronic device 201 may determine that the first coil of the first electronic device 201 and the transmission coil of the second electronic device 202 are normally aligned.

According to an embodiment, when identifying that the received power is less than the specified value (yes in operation 505), the first electronic device 201 may display information (hereinafter, guide information) for guiding movement of a mounted position on the second electronic device 202 on the display 260 in operation 507. For example, the first electronic device 201 may further display the guide information while displaying mounting information on the display 260. For example, the guide information may include information (e.g., an arrow) indicating a direction of movement for aligning the first coil of the first electronic device 201 with the transmission coil included in the second electronic device 202.

According to an embodiment, in operation 509, the first electronic device 201 may identify whether the first electronic device 201 has been moved (or the first coil is aligned with the transmission coil). For example, the first electronic device 201 may identify whether the first electronic device 201 has been moved, using the accelerometer included in the first electronic device 201. For example, the first electronic device 201 may identify whether the first coil is aligned with the transmission coil included in the second electronic device 202 based on the efficiency of power received through the first coil. For example, when identifying that the first electronic device 201 has not been moved (no in operation 509), the first electronic device 201 may continue to display the guide information.

According to an embodiment, when identifying that the first electronic device 201 has been moved (yes in operation 509), the first electronic device 201 may adjust the mounting information based on a moved direction and distance in operation 511. For example, the first electronic device 201 may adjust the display position of the first image overlapped on the second image based on the moved direction and distance of the first electronic device 201. For example, the first electronic device 201 may identify the moved direction and distance of the first electronic device 201 in real time through the sensor (e.g., the sensor 240 of FIG. 2). For example, the moved direction and distance may be identified based on X/Y axis coordinates. The first electronic device 201 may adjust the display position of the first image based on the moved direction and distance identified through the sensor 240. This allows the user to identify whether the first coil of the first electronic device 201 is correctly aligned with the transmission coil included in the second electronic device 202. In addition, the user may facilitate alignment between the first coil of the first electronic device 201 and the transmission coil included in the second electronic device 202.

According to an embodiment, operation 501 to operation 507 may be performed repeatedly during wireless charging of the first electronic device 201. When the first electronic device 201 is completely charged, the first electronic device 201 may not perform operations 501 to 507.

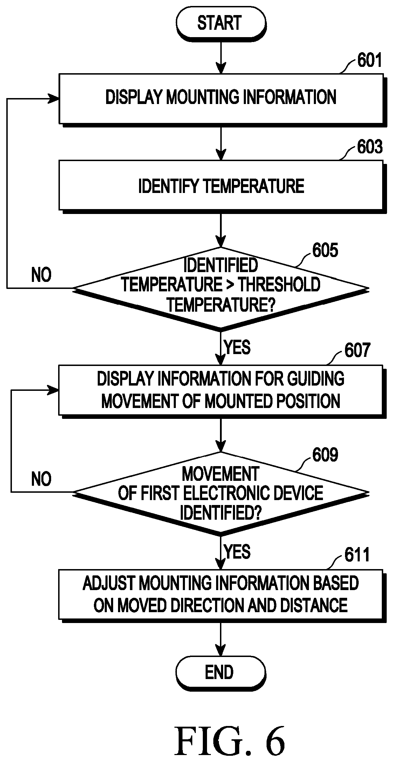

FIG. 6 is a flowchart illustrating a method of providing information for guiding movement of a mounted position based on a temperature in an electronic device according to an embodiment.

Referring to FIG. 6, according to an embodiment, a first electronic device (e.g., the first electronic device 201 of FIG. 2B) may display mounting information on a display (e.g., the display 260 of FIG. 2B) in operation 601. For example, the mounting information may refer to information indicating the mounted state and position of the first electronic device 201 on the second electronic device 202. The mounting information may include a first image representing the first electronic device 201 and a second image representing the second electronic device 202.

According to an embodiment, in operation 603, the first electronic device 201 may identify the temperature of the first electronic device 201. For example, the first electronic device 201 may identify the temperature of at least one of the components included in the first electronic device 201. In this case, the first electronic device 201 may identify the temperature of the first electronic device 201 through a temperature sensor (e.g., the sensor 240 of FIG. 2B). For example, the first electronic device 201 may identify the temperature of a first coil of the first electronic device 201 or a temperature around the first coil through the temperature sensor (e.g., the sensor 240 of FIG. 2B). In operation 605, the first electronic device 201 may identify whether the identified temperature is higher than a threshold temperature. For example, the threshold temperature may be a temperature value caused by heat generation when the first coil of the first electronic device 201 and the transmission coil of the second electronic device 202 are not normally aligned.

According to an embodiment, when identifying that the identified temperature is not higher than the threshold temperature (no in operation 605), the first electronic device 201 may continue to display the mounting information. For example, when identifying that the identified temperature is not higher than the threshold temperature, the first electronic device 201 may determine that the first coil of the first electronic device 201 and the transmission coil of the second electronic device 202 are normally aligned.

According to an embodiment, when identifying that the identified temperature is higher than the threshold temperature (yes in operation 605), the first electronic device 201 may display information (hereinafter, guide information) for guiding movement of the mounted position on the second electronic device 202 on the display 260 in operation 607. For example, the first electronic device 201 may further display the guide information while displaying the mounting information on the display 260. For example, the guide information may include information indicating a direction of movement for aligning the first coil of the first electronic device 201 with the transmission coil included in the second electronic device 202.

In operation 609, according to an embodiment, the first electronic device 201 may identify whether the first electronic device 201 has been moved. For example, when identifying that the first electronic device 201 has not been moved (no in operation 609), the first electronic device 201 may continue to display the guide information.

According to an embodiment, when identifying that the first electronic device 201 has been moved (yes in operation 709), the first electronic device 201 may adjust the mounting information based on a moved direction and distance in operation 611. For example, the first electronic device 201 may adjust the display position of the first image overlapped on the second image based on the moved direction and distance of the first electronic device 201. This allows the user to identify whether the first coil of the first electronic device 201 is correctly aligned with the transmission coil included in the second electronic device 202. In addition, the user may facilitate alignment between the first coil of the first electronic device 201 and the transmission coil included in the second electronic device 202.

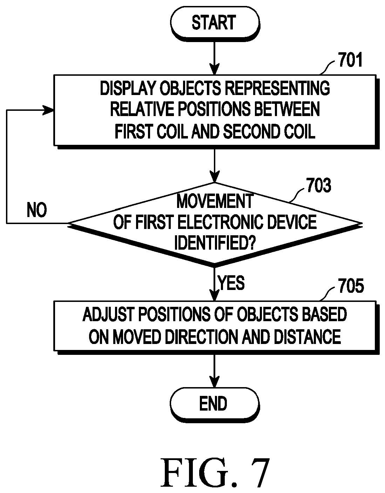

FIG. 7 is a flowchart illustrating a method of providing objects representing relative positions of a first coil and a second coil in an electronic device according to an embodiment.

According to an embodiment, in operation 701, a first electronic device (e.g., the first electronic device 201 of FIG. 2B) may display objects representing relative positions between a first coil included in a power reception circuit (e.g., the power reception circuit 210 of FIG. 2B) and a second coil included in a second electronic device (e.g., a transmission coil included in second electronic device 202). For example, the objects may be displayed together with information (hereinafter, guide information) for guiding movement of a mounted position of the first electronic device 201. For example, as the distance between the position of the first coil included in the first electronic device 201 and the second coil (e.g., the transmission coil) included in the second electronic device 202 is greater, the distance between the objects may be greater. On the contrary, as the distance between the position of the first coil included in the first electronic device 201 and the second coil (e.g., the transmission coil) included in the second electronic device 202 is smaller, the distance between the objects may be smaller.

According to an embodiment, in operation 703, the first electronic device 201 may identify whether the first electronic device 201 has been moved. For example, when identifying that the first electronic device 201 has not been moved (no in operation 703), the first electronic device 201 may continue to display the objects.

According to an embodiment, when identifying that the first electronic device 201 has been moved (yes in operation 703), the first electronic device 201 may adjust the positions of the objects based on a moved direction and distance in operation 705. For example, when the position of the first coil included in the first electronic device 201 is aligned with the second coil (e.g., the transmission coil) included in the second electronic device 202, the objects may be displayed to coincide with each other. Therefore, a user may easily align the first coil of the first electronic device 201 with the transmission coil included in the second electronic device 202.

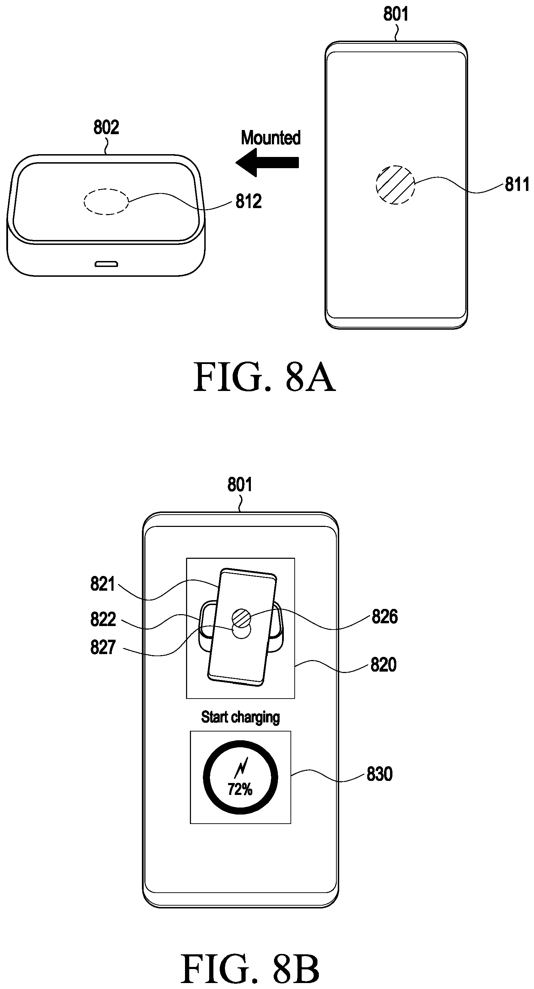

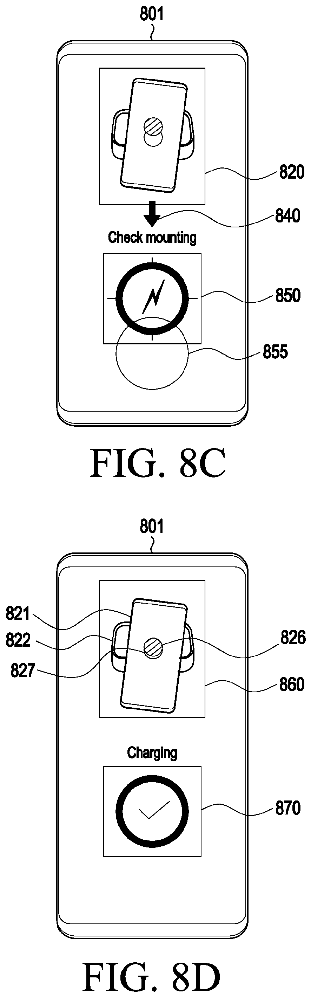

FIGS. 8A, 8B, 8C, and 8D are diagrams illustrating a method of providing mounting information indicating a mounted state of an electronic device on a wireless power transmission device and information for guiding movement of a mounted position in the electronic device according to an embodiment.

Referring to FIG. 8A, according to an embodiment, a first electronic device 801 (e.g., the first electronic device 201 of FIG. 2B) may wirelessly receive power from a second electronic device 802 (e.g., the second electronic device 202 of FIG. 2B). For example, the first electronic device 801 may be a bar-type terminal (or smartphone). The second electronic device 802 may be a pad-type wireless charger. The first electronic device 801 may be mounted on the second electronic device 802 to wirelessly receive power from the second electronic device 802. For example, the first electronic device 801 may include a first coil 811 for receiving power. The second electronic device 802 may include a transmission coil 812 for transmitting power.

Referring to FIG. 8B, according to an embodiment, when the first electronic device 801 is mounted on the second electronic device 802, the first electronic device 801 may generate and display mounting information 820 indicating a mounted state. For example, the mounting information 820 may include a first image 821 representing the first electronic device 801 and a second image 822 representing the second electronic device 802. A first coil image 826 representing the first coil 811 may be displayed on the first image 821. For example, the first coil image 826 may be displayed in an area of the first image 821, corresponding to a position where the first coil 811 is disposed in the first electronic device 801. A transmission coil image 827 representing the transmission coil 812 may be displayed on the second image 822. For example, the transmission coil image 827 may be displayed in an area of the second image 822, corresponding to a position where the transmission coil 812 is disposed in the second electronic device 802. For example, the first coil image 826 may be displayed to be distinguished from the transmission coil image 827 (e.g., by color, shading, brightness, and/or size). For example, the distance between the first coil image 826 and the transmission coil image 827 may be determined by a relative distance between the first coil 811 and the transmission coil 812.

According to an embodiment, the first electronic device 801 may display an object 830 indicating that a charging operation is being performed, while wirelessly receiving power from the second electronic device 902. In this case, the object 830 may include information indicating the charged state of a battery included in the first electronic device 801. For example, the first electronic device 801 may identify whether the first coil 811 is aligned with the transmission coil 812 transmitting power based on whether the magnitude of the received power is less than a specified value. The first electronic device 801 may also identify whether the first coil 811 and the transmission coil 812 transmitting power are aligned based on whether the temperature of the first electronic device 201 (e.g., the temperature of the first coil 811 or a temperature around the first coil 811) is higher than a specified temperature.

Referring to FIG. 8C, according to an embodiment, when the first coil 811 and the transmission coil 812 are not aligned (or are only partially aligned), the first electronic device 801 may display information (hereinafter, guide information) 840 for guiding movement of the mounted position of the first electronic device 801. For example, the guide information 840 may include information (e.g., an arrow) indicating a direction in which the first electronic device 801 is to be moved. The guide information 840 may also indicate a distance for the first electronic device 801 to move by the length or size of the arrow. For example, when the second electronic device 201 includes a single transmission coil, the first electronic device 201 may use a separate sensor (e.g., a sensing coil or magnet) to determine a direction in which the first electronic device 201 is to move. Alternatively, the second electronic device 201 may further consider the magnitude of power received through the first coil 811 (e.g., by comparing the received power with a specified value) and identification information of the transmission coil 812 to determine a direction in which the first electronic device 201 is to move.

According to an embodiment, when the first coil 811 and the transmission coil 812 transmitting power are not normally aligned after charging begins, the first electronic device 801 may display a first object 850 and a second object 855 indicating a check of mounting. The distance between the first object 850 and the second object 855 may indicate a relative distance between the first coil 811 and the transmission coil 812.

Referring to FIG. 8D, according to an embodiment, when the mounted position of the first electronic device 801 is moved, the distance between the first object 850 and the second object 855 may be changed. For example, the first electronic device 801 may identify a distance and direction that the first electronic device 801 has moved through a sensor (e.g., the sensor 240 of FIG. 2B). For example, when the distance between the first coil 811 and the transmission coil 812 decreases as the mounted position of the first electronic device 801 is moved, the first object 850 and the second object 855 may be displayed with a decreased distance therebetween. Further, when the first coil 811 and the transmission coil 812 are aligned as the mounted position of the first electronic device 801 is moved, the first electronic device 801 may display the first object 850 and the second object to coincide with each other.

According to an embodiment, when the first coil 811 and the transmission coil 812 transmitting power are aligned as the mounted position of the first electronic device 801 is moved, the mounting information 860 may be updated such that the first coil image 826 and the transmission coil image 827 coincide with each other. The display position of the first image 821 included in the mounting information 860 may be adjusted based on the moved distance and direction of the first electronic device 801. Additionally, the first electronic device 801 may display an object 870 indicating that the first coil 811 and the transmission coil 812 are aligned. Depending on implementation, the object 870 may be displayed in a display area of a display (e.g., 260 in FIG. 2B) where the first coil 811 is located.

Through the method described above, the first electronic device 801 may provide a user with information about alignment between the first coil 811 of the first electronic device 801 and the transmission coil 812 of the second electronic device 802. Further, the first electronic device 801 may provide guide information to help the user facilitate alignment between the first coil 811 of the first electronic device 201 and the transmission coil 812 of the second electronic device 802.

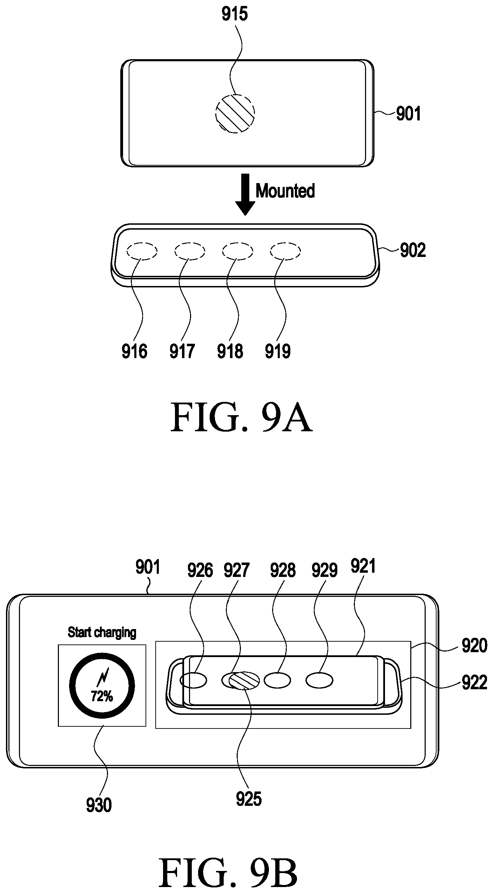

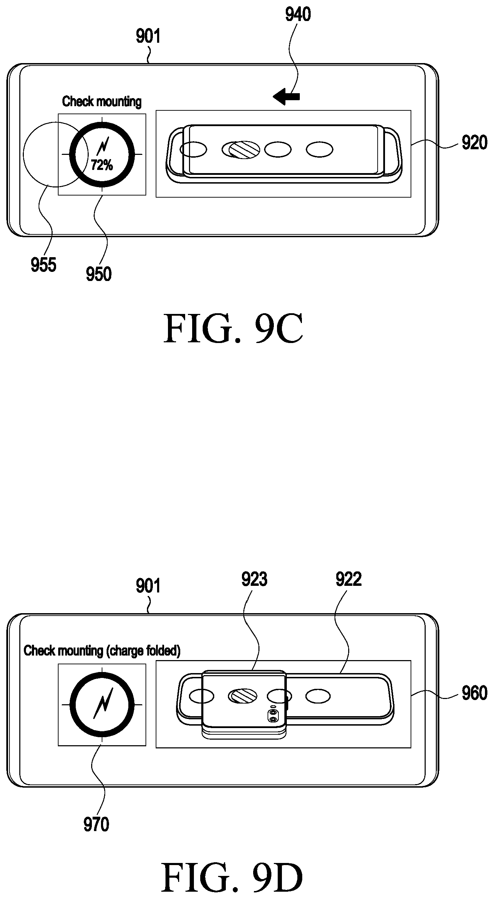

FIGS. 9A, 9B, 9C, and 9D are diagrams illustrating a method of providing mounting information indicating a mounted state of a foldable electronic device on a pad-type wireless power transmission device and information for guiding movement of a mounted position in the foldable electronic device according to an embodiment.

Referring to FIG. 9A, a first electronic device 901 (e.g., the first electronic device 201 of FIG. 2B) may wirelessly receive power from a second electronic device 902 (e.g., the second electronic device 202 of FIG. 2B) according to an embodiment. For example, the first electronic device 901 may be a terminal (or smartphone) including a foldable display. The second electronic device 902 may be a wireless charger in the form of a pad. The first electronic device 901 may be mounted on the second electronic device 902 to wirelessly receive power from the second electronic device 902. For example, the first electronic device 901 may include a first coil 915 for receiving power. The second electronic device 902 may include a plurality of coils 916, 917, 918, and 919 (e.g., transmission coils) for transmitting power. The number or shape of the plurality of coils is merely exemplary, and the technical idea of the disclosure may not be limited thereto.

Referring to FIG. 9B, according to an embodiment, when the first electronic device 901 is mounted on the second electronic device 902, the first electronic device 901 may generate and display mounting information 920 indicating a mounted state. For example, the first electronic device 901 may be mounted in the unfolded state on the second electronic device 902. For example, the mounting information 920 may include a first image 921 representing the first electronic device 901 and a second image 922 representing the second electronic device 902. For example, the first image 921 may represent the first electronic device 901 in the unfolded state. A coil image 925 representing the first coil 915 may be displayed on the first image 921. For example, the coil image 925 may be displayed in an area of the first image 921, corresponding to a position where the first coil 915 is disposed in the first electronic device 901. Transmission coil images 926, 927, 928, and 929 representing the plurality of transmission coils 916, 917, 918, and 919 may be displayed on the second image 922. For example, each of the transmission coil images 926, 927, 928, and 929 may be displayed in an area of the second image 922, corresponding to a position where the transmission coil is disposed in the second electronic device 902. For example, the coil image 925 may be displayed to be distinguished from the transmission coil images 926, 927, 928, and 929 (e.g., by color, shading, brightness, and/or size).

According to an embodiment, the first electronic device 901 may display an object 930 indicating that a charging operation is being performed, while wirelessly receiving power from the second electronic device 902 (e.g., the second transmission coil 917 among the plurality of transmission coils 916, 917, 918, and 919). **In** this case, the first object 930 may include information indicating the charged state of a battery included in the first electronic device 901. For example, the first electronic device 901 may identify whether the first coil 915 and the second transmission coil 917 transmitting power to the first coil 915 are aligned based on whether the magnitude of the received power is less than a specified value.

Referring to FIG. 9C, according to an embodiment, when the first coil 911 and the second transmission coil 917 are not aligned, the first electronic device 901 may display information (hereinafter, guide information) 940 for guiding movement of the mounted position of the first electronic device 901. For example, the guide information 940 may include information (e.g., an arrow) indicating a direction in which the first electronic device 901 is to move. The guide information 940 may also indicate a distance for the first electronic device 901 to move through the length or size of the arrow.

According to an embodiment, when the first coil 911 and the second transmission coil 917 are not normally aligned after charging begins, the first electronic device 901 may display a first object 950 and a second object 955 indicating a relative distance between the first coil 911 and the second transmission coil 917. For example, the first object 950 may further include information for guiding a check of mounting of the first electronic device 910. The distance between the first object 950 and the second object 955 may be estimated or determined based on the distance between the first coil 915 and the second transmission coil 917. For example, depending on implementation, the first electronic device 910 may display the guide information 940 indicating a direction of movement around the first object 950 and the second object 955. When the mounted position of the first electronic device 901 is moved, the distance between the first object 950 and the second object 955 may also be changed. For example, the first electronic device 901 may identify the distance and direction the first electronic device 901 has been moved through a sensor (e.g., the sensor 240 of FIG. 2B). For example, when the distance between the first coil 915 and the second transmission coil 917 decreases as the mounted position of the first electronic device 901 is moved, the display of the first object 950 and the second object 955 may be updated such that the distance between the first object 950 and the second object 955 is also decreased. Further, when the first coil 915 and the second transmission coil 917 are aligned as the mounted position of the first electronic device 901 is moved, the first electronic device 901 may display the first object 950 and the second object 955 such that the first object 950 and the third object 955 form a concentric circle. In addition, when the first coil 915 and the second transmission coil 917 are aligned, the first electronic device 901 may further display information (e.g., an object or a message) indicating that the first coil 915 and the second transmission coil 917 are aligned.

Referring to FIG. 9D, according to an embodiment, the first electronic device 901 may generate and display information (hereinafter, "guide information") 960 to guide mounting in the folded state. For example, the first electronic device 901 may determine that it is advantageous to receive power when mounted in the folded state rather than in the unfolded state, based on the arrangement of the first coil 915 and the transmission coils 916, 917, 917, and 919. The first electronic device 901 may display the guide information 960 so that the first electronic device 901 is mounted in the folded state, according to a result of the determination. The first electronic device 901 may also display a third object 970 indicating a check of mounting. The first electronic device 901 may further display information (e.g., a message) for guiding mounting in the folded state, along with the third object 970. For example, the guide information 960 may include a first image 923 representing the first electronic device 901 and a second image 922 representing the second electronic device 902. For example, the first image 923 may represent the first electronic device 901 in the guided folded state. In this case, the first image 923 may be displayed overlapped on the second image 922 at a position where the first coil 915 and the second transmission coil 917 are aligned.

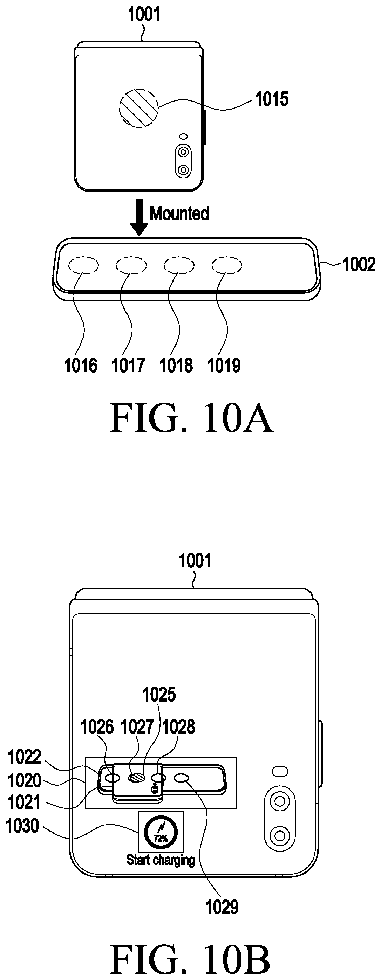

FIGS. 10A and 10B are diagrams illustrating a method of providing mounting information indicating a mounted state of a foldable electronic device on a pad-type wireless power transmission device according to an embodiment.

Referring to FIG. 10A, a first electronic device 1001 (e.g., the first electronic device 201 of FIG. 2B) may wirelessly receive power from a second electronic device 1002 (e.g., the second electronic device 202 of FIG. 2B) according to an embodiment. For example, the first electronic device 1001 may be a terminal (or smartphone) including a foldable display. The second electronic device 1002 may be a wireless charger in the form of a pad. The first electronic device 1001 may be mounted on the second electronic device 1002 to wirelessly receive power from the second electronic device 1002. For example, the first electronic device 1001 may include a first coil 1015 for receiving power. The second electronic device 1002 may include a plurality of coils 1016, 1017, 1018, and 1019 (e.g., transmission coils) for transmitting power. However, the number or shape of the plurality of coils is exemplary, and the technical idea of the disclosure may not be limited thereto.

Referring to FIG. 10B, according to an embodiment, when the first electronic device 1001 is mounted on the second electronic device 1002, the first electronic device 1001 may generate and display mounting information 1020 indicating a mounted state. For example, the first electronic device 1001 may be mounted in the folded state on the second electronic device 1002. In the folded state, the first electronic device 1001 may display the mounting information 1020 through an external display. For example, the mounting information 1020 may include a first image 1021 representing the first electronic device 1001 and a second image 1022 representing the second electronic device 1002. For example, the first image 1021 may represent the first electronic device 1001 in the folded state. A coil image 1025 representing the first coil 1015 may be displayed on the first image 1021. For example, the coil image 1025 may be displayed in an area of the first image 1021, corresponding to a position where the first coil 1015 is disposed in the first electronic device 1001. Transmission coil images 1026, 1027, 1028, and 1029 representing the plurality of transmission coils 1016, 1017, 1018, and 1019 may be displayed on the second image 1022. For example, each of the transmission coil images 1026, 1027, 1028, and 1029 may be displayed in an area of the second image 1022, corresponding to a position where the transmission coil is disposed in the second electronic device 1002. For example, the coil image 1025 may be displayed to be distinguished from the transmission coil images 1026, 1027, 1028, and 1029 (e.g., by color, shading, brightness, and/or size).

According to an embodiment, the first electronic device 1001 may identify whether the first coil 1015 and the second transmission coil 1017 transmitting power to the first coil 1015 are aligned based on whether the magnitude of the received power is less than a specified value (and/or based on whether the temperature of the first electronic device 1001 is greater than a specified temperature). When identifying that the first coil 1015 and the second transmission coil 1017 are aligned, the first electronic device 1001 may display an object 1030 indicating that they are normally aligned. At this time, the object 1030 may also display information indicating that a charging operation is being performed.

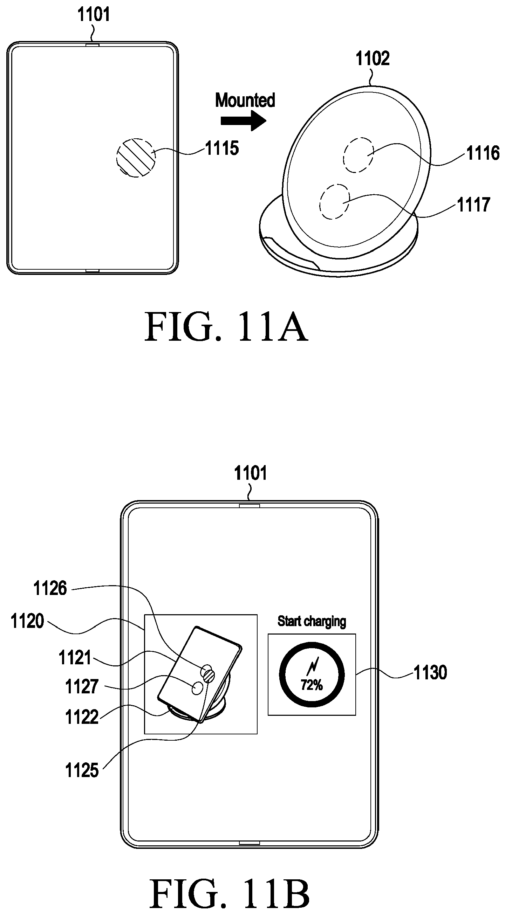

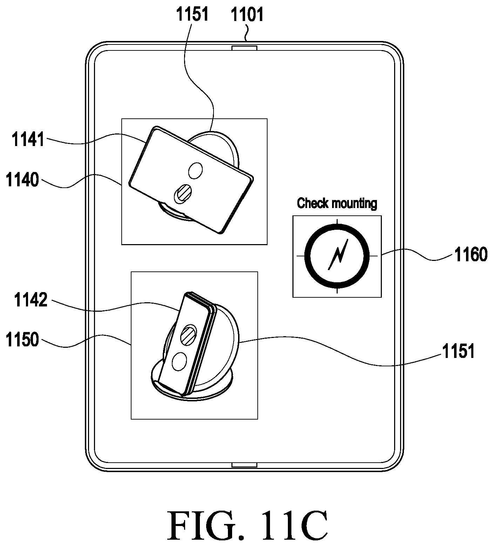

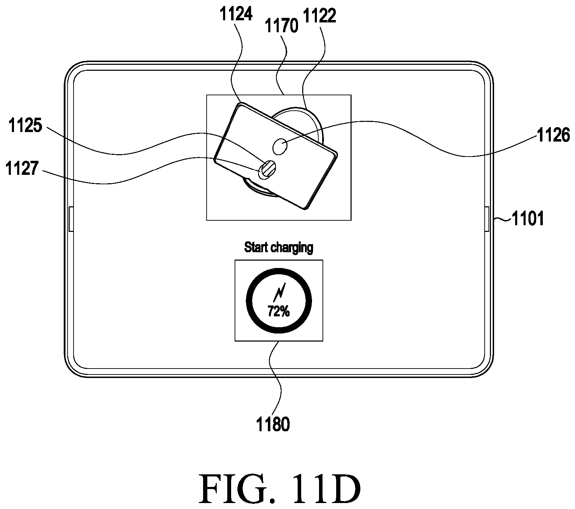

FIGS. 11A, 11B, 11C, and 11D are diagrams illustrating a method of providing mounting information indicating a mounted state of a foldable electronic device on a stand-type wireless power transmission device and information for guiding movement of a mounted position in the foldable electronic device according to an embodiment.

Referring to FIG. 11A, a first electronic device 1101 (e.g., the first electronic device 201 of FIG. 2B) may wirelessly receive power from a second electronic device 1102 (e.g., the second electronic device 202 of FIG. 2B) according to an embodiment. For example, the first electronic device 1101 may be a terminal (or smartphone) including a foldable display. The second electronic device 1102 may be a wireless charger in the form of a stand. The first electronic device 1101 may be mounted on the second electronic device 1102 to wirelessly receive power from the second electronic device 1102. For example, the first electronic device 1101 may include a first coil 1115 for receiving power. For example, when charging is initiated, a first object 1130 or a second object 1160 may be displayed at a position corresponding to the first coil 1115. The second electronic device 1102 may include a plurality of coils 1116 and 1117 (e.g., transmission coils) for transmitting power. The number or shape of the plurality of coils is exemplary, and the technical idea of the disclosure may not be limited thereto.

Referring to FIG. 11B, according to an embodiment, when the first electronic device 1101 is mounted on the second electronic device 1102, the first electronic device 1101 may generate and display mounting information 1120 indicating a mounted state. For example, the first electronic device 1101 may be mounted on the second electronic device 1102 in a state where the first electronic device 1101 is unfolded in a vertical direction (e.g., a direction in which a folding axis is perpendicular to the ground). For example, the mounting information 1120 may include a first image 1121 representing the first electronic device 1101 and a second image 1122 representing the second electronic device 1102. For example, the first image 1121 may represent the first electronic device 1101 in the vertically unfolded state. A coil image 1125 representing the first coil 1115 may be displayed on the first image 1121. For example, the coil image 1125 may be displayed in an area of the first image 1121, corresponding to a position where the first coil 1115 is disposed in the first electronic device 1101. Transmission coil images 1126 and 1127 representing the plurality of transmission coils 1116 and 1117 may be displayed on the second image 1122. For example, each of the transmission coil images 1126 and 1127 may be displayed in an area of the second image 1122, corresponding to a position where the transmission coil is disposed in the second electronic device 1102. For example, the coil image 1125 may be displayed to be distinguished from the transmission coil images 1126 and 1127 (e.g., by color, shading, brightness, and/or size).

According to an embodiment, the first electronic device 1101 may display a first object 1130 indicating that a charging operation is being performed, while wirelessly receiving power from the second electronic device 1102. In this case, the first object 1130 may include information indicating a charged state of a battery included in the first electronic device 1101. For example, the first electronic device 1101 may identify whether the first coil 1115 and a first transmission coil 1116 transmitting power to the first coil 1115 are aligned based on whether the magnitude of received power is less than a specified value (or based on whether the temperature of the first electronic device 1101 is greater than a specified temperature).

Referring to FIG. 11C, according to an embodiment, when identifying that the first coil 1115 and the first transmission coil 1116 transmitting power are in misalignment, the first electronic device 1101 may generate and display guide information for changing the mounted state of the first electronic device 1101. For example, the first electronic device 1101 may generate and display information for guiding mounting in the horizontal direction (hereinafter, referred to as first guide information) 1140 and information for guiding mounting in the folded state (hereinafter referred to as second guide information) 1150. For example, the first electronic device 1101 may determine that mounting horizontally or in the folded state is advantageous for receiving power, based on the arrangement of the first coil 1115 and the transmission coils 1116 and 1117. The first electronic device 1101 may display the first guide information 1140 to guide the first electronic device 1101 to be mounted horizontally and the second guide information 1150 to guide the first electronic device 1101 to be mounted in the folded state. At this time, the first electronic device 1101 may also display a second object 1160 indicating a check of mounting. For example, the first guide information 1140 may include a first image 1141 representing the first electronic device 1101 in the horizontally unfolded state and a second image 1151 representing the second electronic device 1102. The second guide information 1150 may include a third image 1142 representing the first electronic device 1101 in the folded state and the second image 1151 representing the second electronic device 1102.

Referring to FIG. 11D, according to an embodiment, when the first electronic device 1101 is mounted in the horizontal direction on the second electronic device 1102, the first electronic device 1101 may generate and display mounting information 1170 indicating a mounted state. For example, the first electronic device 1101 may be mounted in the horizontally unfolded state on the second electronic device 1102. In this case, the first electronic device 1101 may display the mounting information 1170 in the horizontally unfolded state. For example, the mounting information 1170 may include a first image 1124 representing the first electronic device 1101 and a second image 1122 representing the second electronic device 1102. For example, the first image 1124 may represent the first electronic device 1101 in the horizontally unfolded state. A coil image 1125 representing the first coil 1115 may be displayed on the first image 1124. For example, the coil image 1125 may be displayed in an area of the first image 1124, corresponding to a position where the first coil 1115 is disposed in the first electronic device 1101. Transmission coil images 1126 and 1127 representing the plurality of transmission coils 1116 and 1117 may be displayed on the second image 1122. For example, each of the transmission coil images 1126 and 1127 may be displayed in an area of the second image 1122, corresponding to a position where the transmission coil is disposed in the second electronic device 1102. For example, the coil image 1125 may be displayed to be distinguished from the transmission coil images 1126 and 1127 (e.g., by color, shading, brightness, and/or size).

According to an embodiment, the first electronic device 1101 may identify whether the first coil 1115 and the first transmission coil 1116 transmitting power to the first coil 1115 are aligned based on whether the magnitude of the received power is less than a specified value. When identifying that the first coil 1115 and the first transmission coil 1116 are aligned, the first electronic device 1101 may display an object 1180 indicating that they are normally aligned.

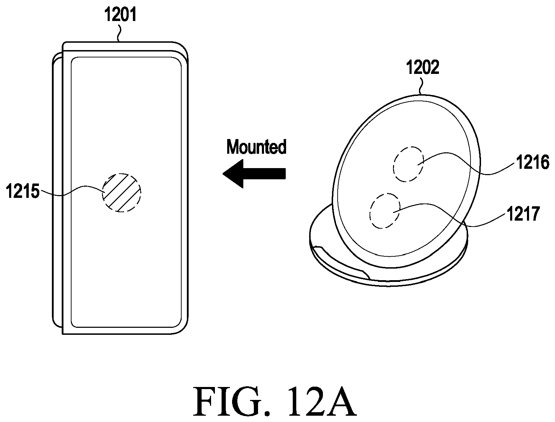

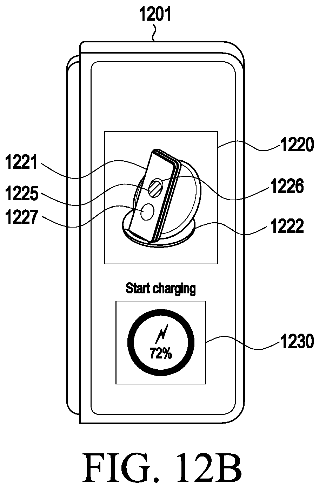

FIGS. 12A and 12B are diagrams illustrating a method of providing mounting information indicating a mounted state of a foldable electronic device on a stand-type wireless power transmission device according to an embodiment.

Referring to FIG. 12A, a first electronic device 1201 (e.g., the first electronic device 201 of FIG. 2B) may wirelessly receive power from a second electronic device 1202 (e.g., the second electronic device 202 of FIG. 2B) according to an embodiment. For example, the first electronic device 1201 may be a terminal (or smartphone) including a foldable display. The second electronic device 1202 may be a wireless charger in the form of a stand. The first electronic device 1201 may be mounted on the second electronic device 1202 to wirelessly receive power from the second electronic device 1202. For example, the first electronic device 1001 may include a first coil 1215 for receiving power. The second electronic device 1202 may include a plurality of coils 1216 and 1217 (e.g., transmission coils) for transmitting power. However, the number or shape of the plurality of coils is exemplary, and the technical idea of the disclosure may not be limited thereto.

Referring to FIG. 12B, according to an embodiment, when the first electronic device 1201 is mounted on the second electronic device 1202, the first electronic device 1201 may generate and display mounting information 1220 indicating a mounted state. For example, the first electronic device 1201 may be mounted in the folded state on the second electronic device 1202. In the folded state, the first electronic device 1001 may display the mounting information 1220 through an external display. For example, the mounting information 1220 may include a first image 1221 representing the first electronic device 1201 and a second image 1222 representing the second electronic device 1202. For example, the first image 1221 may represent the first electronic device 1201 in the folded state. A coil image 1225 representing the first coil 1215 may be displayed on the first image 1221. For example, the coil image 1225 may be displayed in an area of the first image 1221, corresponding to a position where the first coil 1215 is disposed in the first electronic device 1201. Transmission coil images 1226 and 1227 representing the plurality of transmission coils 1216 and 1217 may be displayed on the second image 1222. For example, each of the transmission coil images 1226 and 1227 may be displayed in an area of the second image 1222, corresponding to a position where the transmission coil is disposed in the second electronic device 1202. For example, the coil image 1225 may be displayed to be distinguished from the transmission coil images 1226 and 1227 (e.g., by color, shading, brightness, and/or size).

According to an embodiment, the first electronic device 1201 may identify whether the first coil 1215 and the first transmission coil 1216 are aligned based on whether the magnitude of the received power is less than a specified value. When identifying that the first coil 1215 and the first transmission coil 1216 are aligned, the first electronic device 1201 may display an object 1230 indicating that they are normally aligned. At this time, the object 1230 may also display information indicating that a charging operation is being performed. Depending on implementation, the object 1230 may be displayed in a display area that is at least partially overlapped with the first coil 1215 of the first electronic device 1201.

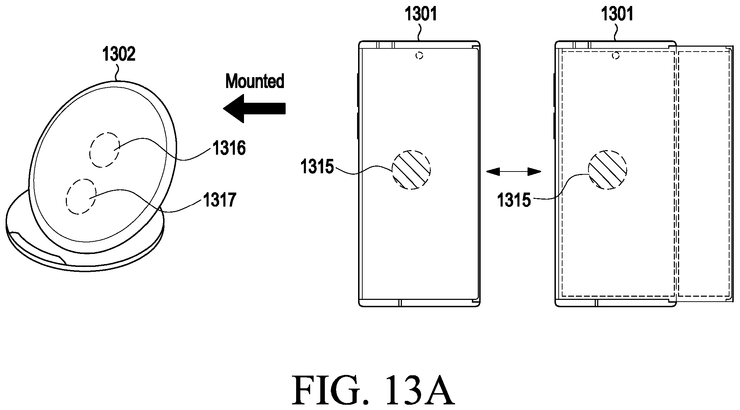

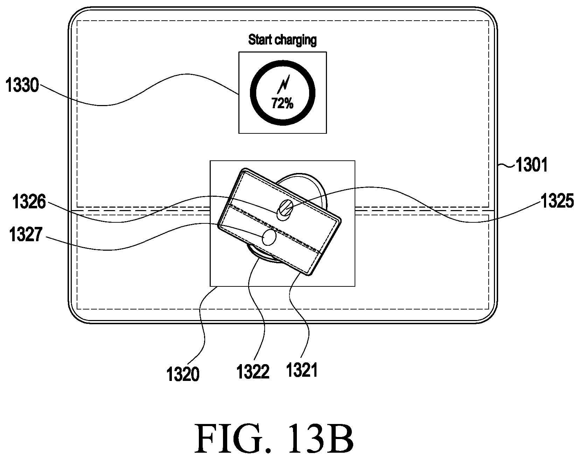

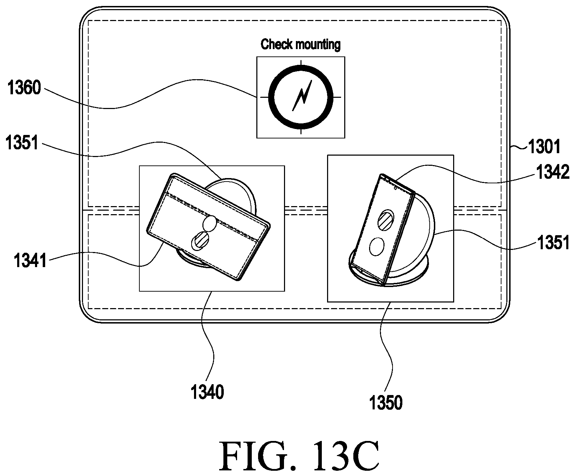

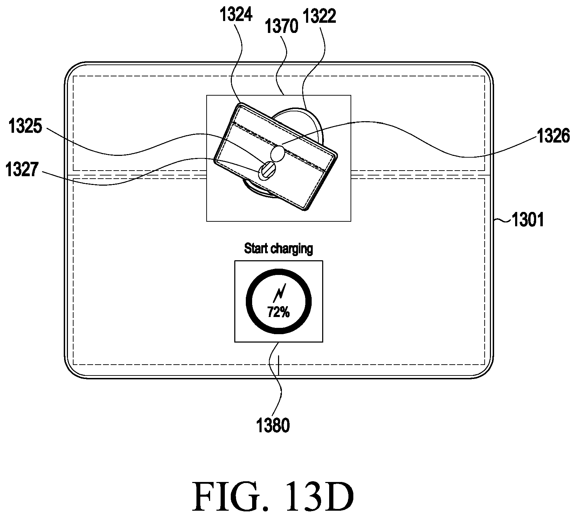

FIGS. 13A, 13B, 13C, and 13D are diagrams illustrating a method of providing mounting information indicating a mounted state of a rollable electronic device on a stand-type wireless power transmission device and information for guiding movement of a mounted position in the rollable electronic device according to an embodiment.

Referring to FIG. 13A, a first electronic device 1301 (e.g., the first electronic device 201 of FIG. 2B) may wirelessly receive power from a second electronic device 1302 (e.g., the second electronic device 202 of FIG. 2B) according to an embodiment. For example, the first electronic device 1301 may be a terminal (or smartphone) including a rollable display. For example, the first electronic device 1301 may have an extendable or retractable display area. The second electronic device 1302 may be a wireless charger in the form of a stand. The first electronic device 1301 may be mounted on the second electronic device 1302 to wirelessly receive power from the second electronic device 1302. For example, the first electronic device 1301 may include a first coil 1315 for receiving power. The second electronic device 1302 may include a plurality of coils 1316 and 1317 (e.g., transmission coils) for transmitting power. However, the number or shape of the plurality of coils is exemplary, and the technical idea of the disclosure may not be limited thereto.

Referring to FIG. 13B, according to an embodiment, when the first electronic device 1301 is mounted on the second electronic device 1302, the first electronic device 1301 may generate and display mounting information 1320 indicating a mounted state. For example, the first electronic device 1301 may be mounted on the second electronic device 1302 in a state where the first electronic device 1301 is unfolded in the horizontal direction (e.g., a slidable direction perpendicular to the ground). For example, the mounting information 1320 may include a first image 1321 representing the first electronic device 1301 and a second image 1322 representing the second electronic device 1302. For example, the first image 1321 may represent the first electronic device 1301 in the horizontally unfolded state. A coil image 1325 representing the first coil 1315 may be displayed on the first image 1321. For example, the coil image 1325 may be displayed in an area of the first image 1321, corresponding to a position where the first coil 1315 is disposed in the first electronic device 1301. Transmission coil images 1326 and 1327 representing the plurality of transmission coils 1316 and 1317 may be displayed on the second image 1322. For example, each of the transmission coil images 1326 and 1327 may be displayed in an area of the second image 1322, corresponding to a position where the transmission coil is disposed in the second electronic device 1302. For example, the coil image 1325 may be displayed to be distinguished from the transmission coil images 1326 and 1327 (e.g., by color, shading, brightness, and/or size).

According to an embodiment, the first electronic device 1301 may display a first object 1330 indicating that a charging operation is being performed, while wirelessly receiving power from the second electronic device 1302. The first object 1330 may include information indicating the charged state of a battery included in the first electronic device 1301. For example, the first electronic device 1301 may identify whether the first coil 1315 and the first transmission coil 1316 transmitting power to the first coil 1315 are aligned based on whether the magnitude of the received power is less than a specified value.

Referring to FIG. 13C, according to an embodiment, the first electronic device 1101 may generate and display guide information for changing the mounted state of the first electronic device 1301. For example, when identifying that the first coil 1315 and the first transmission coil 1316 transmitting power to the first coil 1315 are not normally aligned, the first electronic device 1301 may generate and display information (hereinafter, referred to as first guide information) 1340 to guide mounting upside down and information (hereinafter, referred to as second guide information) 1350 to guide mounting of the rollable display in the retracted state. For example, the first electronic device 1301 may determine, based on the arrangement of the first coil 1315 and the transmission coils 1316 and 1317, that it is advantageous to receive power when the rollable display is mounted in an upside-down or retracted state. The first electronic device 1301 may display the first guide information 1340 to guide the first electronic device 1301 to be mounted upside down, and the second guide information 1350 to guide the first electronic device 1301 to be mounted with the rollable display retracted, based on a result of the determination. At this time, the first electronic device 1301 may also display a second object 1360 indicating a check of mounting. For example, the first guide information 1340 may include a first image 1341 representing the first electronic device 1301 in the upside-down state and a second image 1351 representing the second electronic device 1302. The second guide information 1350 may include a third image 1342 representing the first electronic device 1301 in the retracted state of the rollable display and the second image 1351 representing the second electronic device 1302.

Referring to FIG. 13D, according to an embodiment, when the first electronic device 1301 is mounted on the second electronic device 1302 upside down relative to the mounted state in FIG. 13B, the first electronic device 1301 may generate and display mounting information 1370 indicating a mounted state. For example, the first electronic device 1301 may be mounted in the upside-down state with the rollable display extended, on the second electronic device 1302. In this case, the first electronic device 1301 may display the mounting information 1370 in the upside-down unfolded state. For example, the mounting information 1370 may include a first image 1324 representing the first electronic device 1301 mounted upside down relative to the mounted state in FIG. 13B, and a second image 1322 representing the second electronic device 1302. A coil image 1325 representing the first coil 1315 may be displayed on the first image 1324. For example, the coil image 1325 may be displayed in an area of the first image 1324, corresponding to a position where the first coil 1315 is disposed in the first electronic device 1301. Transmission coil images 1326 and 1327 representing the plurality of transmission coils 1316 and 1317 may be displayed on the second image 1322. For example, each of the transmission coil images 1326 and 1327 may be displayed in an area of the second image 1322, corresponding to a position where the transmission coil is disposed in the second electronic device 1302. For example, the coil image 1325 may be displayed to be distinguished from the transmission coil images 1326 and 1327 (e.g., by color, shading, brightness, and/or size).

According to an embodiment, the first electronic device 1301 may identify whether the first coil 1315 and the second transmission coil 1317 transmitting power to the first coil 1315 are aligned based on whether the magnitude of the received power is less than a specified value. When identifying that the first coil 1315 and the second transmission coil 1317 are aligned, the first electronic device 1301 may display an object 1380 indicating that they are normally aligned. When the first coil 1315 and the second transmission coil 1317 transmitting power to the first coil 1315 are aligned, the first electronic device 1301 may display the coil image 1325 and the second transmission coil image 1327 to overlap with each other. The first electronic device 1301 may provide a user with information indicating that the first coil 1315 and the second transmission coil 1317 are normally aligned by displaying the coil image 1325 and the second transmission coil image 1327 substantially overlapping.

According to the above-described method, the first electronic device 201 may provide the user with information indicating whether the first electronic device 201 is normally mounted on the second electronic device 202. Although the first electronic device 201 may be implemented in various forms, the first electronic device 201 may provide mounting information according to various forms of the first electronic device 201. Further, the first electronic device 201 may provide the user with guide information so that the user may move the mounted position of the first electronic device 201 to align the first coil of the first electronic device 201 with the transmission coil included in the second electronic device 202. Therefore, the first electronic device 201 may increase wireless charging efficiency.

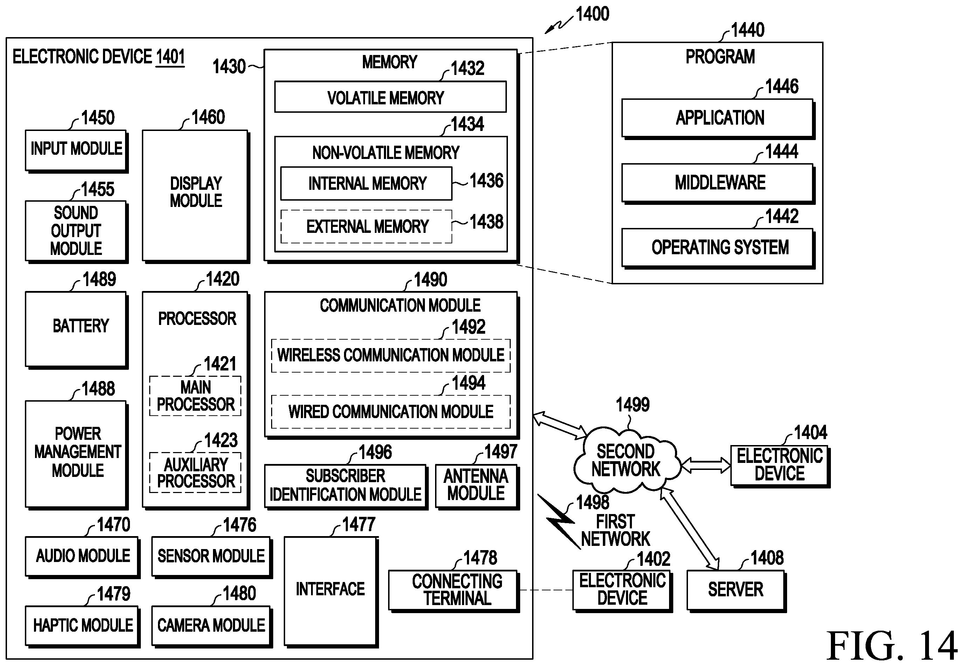

The first electronic device 201 described above may be implemented the same as or similar to electronic devices 1401, 1402, and 1404 of FIG. 14 below. The server 204 may also be implemented the same as or similar to a server 1408 of FIG. 14 below.

FIG. 14 is a diagram illustrating a network environment according to various embodiments.

FIG. 14 is a block diagram illustrating the electronic device 1401 in a network environment 1400 according to various embodiments. Referring to FIG. 14, the electronic device 1401 in the network environment 1400 may communicate with the electronic device 1402 via a first network 1498 (e.g., a short-range wireless communication network), or at least one of the electronic device 1404 or the server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to one embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, a HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to one embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

The first electronic device 201 according to an embodiment may include the power reception circuit 210 including a first coil, the sensor 240, the display 260, the processor 220, and memory 230 storing instructions. According to an embodiment, the instructions, when executed by the processor, may cause the electronic device (201) to when the first electronic device is mounted on the second electronic device 202 wirelessly transmitting power, receive identification information from a second coil transmitting power to the first coil among at least one coil included in the second electronic device. According to an embodiment, the instructions, when executed by the processor, may cause the electronic device to identify a type of the second electronic device and a position of the second coil, based on the identification information. According to an embodiment, the instructions, when executed by the processor, may cause the electronic device to obtain a first image representing the first electronic device, based on a state of the first electronic device identified by the sensor. According to an embodiment, the instructions, when executed by the processor, may cause the electronic device to obtain a second image representing the second electronic device, based on the type of the second electronic device. According to an embodiment, the instructions, when executed by the processor, may cause the electronic device to identify a mounted state of the first electronic device on the second electronic device. According to an embodiment, the instructions, when executed by the processor, may cause the electronic device to display, on the display, mounting information indicating a state in which the first electronic device is mounted on the second electronic device, based on the first image, the second image, and the mounted state of the first electronic device on the second electronic device. The first electronic device thereby allows for correctly placing the first electronic device on the second electronic device so that wireless charging may be performed. Specifically, images of the coils of both the electronic devices may be displayed so that the user may align the coils to optimize the wireless charging.

According to an embodiment, the instructions, when executed by the processor, may cause the electronic device to obtain the mounting information by overlapping the first image in an area of the second image, corresponding to a position at which the first electronic device is mounted on the second electronic device.

According to an embodiment, the instructions, when executed by the processor, may cause the electronic device to display at least one coil image representing the at least one coil included in the second electronic device by overlapping the at least one coil image on the second image. According to an embodiment, the instructions, when executed by the processor, may cause the electronic device to display a coil image representing the first coil by overlapping the coil image on the first image.

According to an embodiment, the instructions, when executed by the processor, may cause the electronic device to wirelessly receive power from the second electronic device through the power reception circuit. According to an embodiment, the instructions, when executed by the processor, may cause the electronic device to, when a magnitude of the power is less than a specified value, display guide information for guiding movement of a mounted position of the first electronic device for alignment between the second coil and the first coil, on the display.

According to an embodiment, the instructions, when executed by the processor, may cause the electronic device to, when it is identified through the sensor that the mounted position of the first electronic device is moved, adjust a position of the first image based on a moved direction and a moved distance of the first electronic device.

According to an embodiment, the instructions, when executed by the processor, may cause the electronic device to display, on the display, guide information for guiding mounting of the first electronic device in a horizontal state or a vertical state on the second electronic device.

According to an embodiment, the instructions, when executed by the processor, may cause the electronic device to, when the first electronic device is a foldable electronic device, identify through the sensor whether the first electronic device is in an unfolded state or a folded state. According to an embodiment, the instructions, when executed by the processor, may cause the electronic device to display, on the display, guide information for guiding mounting of the first electronic device in the unfolded state or the folded state on the second electronic device, based on a result of the identification.

According to an embodiment, the instructions, when executed by the processor, may cause the electronic device to display objects indicating relative positions between the first coil and the second coil. According to an embodiment, the instructions, when executed by the processor, may cause the electronic device to adjust positions of the objects according to the movement of the first electronic device.

According to an embodiment, the instructions, when executed by the processor, may cause the electronic device to, when the first electronic device is moved for alignment between the first coil and the second coil, display information indicating that the first electronic device is normally mounted, on the display.

According to an embodiment, the instructions, when executed by the processor, may cause the electronic device to identify a temperature of the first electronic device, while wirelessly receiving the power from the second electronic device through the power reception circuit. According to an embodiment, the instructions, when executed by the processor, may cause the electronic device to, when the temperature is greater than a threshold temperature, display guide information for guiding movement of the mounted position of the first electronic device for alignment between the first coil and the second coil, on the display.

According to an embodiment, the instructions, when executed by the processor, may cause the electronic device to, when the display is a rollable display, identify through the sensor whether the rollable display is in an extended state or a retracted state. According to an embodiment, the instructions, when executed by the processor, may cause the electronic device to display, on the display, guide information for guiding mounting of the rollable display in the extended state or the retracted state on the second electronic device, based on a result of the identification.

A method of operating the first electronic device 201 according to an embodiment may include, when the first electronic device is mounted on the second electronic device 202 wirelessly transmitting power. The method of operating the first electronic device according to an embodiment may include receiving identification information from a second coil transmitting power to a first coil included in the first electronic device, among at least one coil included in the second electronic device. The method of operating the first electronic device according to an embodiment may include identifying a type of the second electronic device and a position of the second coil, based on the identification information. The method of operating the first electronic device according to an embodiment may include obtaining a first image representing the first electronic device, based on a state of the first electronic device identified through the sensor 240 included in the first electronic device. The method of operating the first electronic device according to an embodiment may include obtaining a second image representing the second electronic device, based on the type of the second electronic device. The method of operating the first electronic device according to an embodiment may include identifying a mounted state of the first electronic device on the second electronic device. The method of operating the first electronic device according to an embodiment may include displaying, on a display (260) included in the first electronic device, mounting information indicating a state in which the first electronic device is mounted on the second electronic device, based on the first image, the second image, and the mounted state of the first electronic device on the second electronic device.

Displaying the mounting information according to an embodiment may include obtaining the mounting information by overlapping the first image in an area of the second image, corresponding to a position at which the first electronic device is mounted on the second electronic device.

Displaying the mounting information according to an embodiment may include displaying at least one coil image representing the at least one coil included in the second electronic device by overlapping the at least one coil image on the second image. Displaying the mounting information according to an embodiment may include displaying a coil image representing the first coil by overlapping the coil image on the first image.

The method of operating the first electronic device according to an embodiment may further include wirelessly receiving power from the second electronic device through the power reception circuit. The method of operating the first electronic device according to an embodiment may further include, when a magnitude of the power is less than a specified value, displaying guide information for guiding movement of a mounted position of the first electronic device for alignment between the second coil and the first coil, on the display.

The method of operating the first electronic device according to an embodiment may further include, when it is identified through the sensor that the mounted position of the first electronic device is moved, adjusting a position of the first image based on a moved direction and a moved distance of the first electronic device.

The method of operating the first electronic device according to an embodiment may further include, when the first electronic device is a foldable electronic device, identifying through the sensor whether the first electronic device is in an unfolded state or a folded state. The method of operating the first electronic device according to an embodiment may further include displaying, on the display, guide information for guiding mounting of the first electronic device in the unfolded state or the folded state on the second electronic device.

The first electronic device 201 according to an embodiment may include the power reception circuit 210 including a first coil, the sensor 240, the display 260, and the processor 220, and memory 230 storing instructions. According to an embodiment, the instructions, when executed by the processor, may cause the electronic device to, when the first electronic device is mounted on a second electronic device wirelessly transmitting power, receive identification information from a second coil transmitting power to the first coil among at least one coil included in the second electronic device. According to an embodiment, the instructions, when executed by the processor, may cause the electronic device to identify a type of the second electronic device and a position of the second coil, based on the identification information. According to an embodiment, the instructions, when executed by the processor, may cause the electronic device to identify a mounted state of the first electronic device through the sensor. According to an embodiment, the instructions, when executed by the processor, may cause the electronic device to display, on the display, information about a state in which the first electronic device is mounted on the second electronic device relative to the second coil included in the second electronic device, based on the mounted state of the first electronic device, the type of the second electronic device, and the position of the second coil.

According to an embodiment, the instructions, when executed by the processor, may cause the electronic device to wirelessly receive power from the second electronic device through the power reception circuit. According to an embodiment, the instructions, when executed by the processor, may cause the electronic device to, when a magnitude of the power is less than a specified value, display guide information for guiding movement of a mounted position of the first electronic device for alignment between the second coil and the first coil, on the display.

According to an embodiment, the instructions, when executed by the processor, may cause the electronic device to, when the first electronic device is a foldable electronic device, display, on the display, guide information for guiding mounting of the first electronic device in an unfolded state or a folded state on the second electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device (201) comprising:
a power reception circuit (210) including a first coil;
a sensor (240);
a display (260);
a processor (220); and
memory (230) storing instructions, wherein the instructions, when executed by the processor, cause the first electronic device (201) to:
when the first electronic device (201) is mounted on a second electronic device (202), receive identification information and, via the first coil, power from a second coil among a plurality of coils included in the second electronic device (202),
identify a type of the second electronic device (202) and a position of the second coil, based on the identification information,
identify, by the sensor (240), a mounted state of the first electronic device (201) on the second electronic device (202), wherein the mounted state includes at least one of a folded state of the display, an unfolded state of the display, a vertical direction state of the first electronic device, a horizontal direction state of the first electronic device, an extended state of the display, or a retracted state of the display,
obtain a first image representing the first electronic device (201) in its mounted state, based on the identified mounted state of the first electronic device (201),
obtain a second image representing the second electronic device (202), based on the type of the second electronic device (202), and
display, on the display (260), mounting information indicating a state in which the first electronic device (201) is mounted on the second electronic device (202)including the first image and the second image by overlapping the first image in an area of the second image, corresponding to a position at which the first electronic device (201) is mounted on the second electronic device (202).

2. The electronic device (201) of claim 1, wherein the instructions, when executed by the processor, cause the electronic device (201) to:
display at least one coil image representing the at least one coil included in the second electronic device (202) by overlapping the at least one coil image on the second image, and
display a coil image representing the first coil by overlapping the coil image on the first image.

3. The electronic device (201) of any one of claims 1 to 2, wherein the instructions, when executed by the processor, cause the electronic device (201) to:
wirelessly receive power from the second electronic device (202) through the power reception circuit (210), and
when a magnitude of the power is less than a specified value, display guide information for guiding movement of a mounted position of the first electronic device (201) for alignment between the second coil and the first coil, on the display (260).

4. The electronic device (201) of any one of claims 1 to 3, wherein the instructions, when executed by the processor, cause the electronic device (201) to:
when it is identified through the sensor (240) that the mounted position of the first electronic device (201) is moved, adjust a position of the first image based on a moved direction and a moved distance of the first electronic device (201).

5. The electronic device (201) of any one of claims 1 to 4, wherein instructions, when executed by the processor, cause the electronic device (201) to:
display, on the display (260), guide information for guiding mounting of the first electronic device (201) in a horizontal state or a vertical state on the second electronic device (202).

6. The electronic device (201) of any one of claims 1 to 5, wherein instructions, when executed by the processor, cause the electronic device (201) to:
when the first electronic device (201) is a foldable electronic device, identify through the sensor (240) whether the first electronic device (201) is in an unfolded state or a folded state, and
display, on the display (260), guide information for guiding mounting of the first electronic device (201) in the unfolded state or the folded state on the second electronic device (202), based on a result of the identification.

7. The electronic device (201) of any one of claims 1 to 6, wherein the instructions, when executed by the processor, cause the electronic device (201) to:
display objects indicating relative positions between the first coil and the second coil, and
adjust positions of the objects according to the movement of the first electronic device (201).

8. The electronic device (201) of any one of claims 1 to 7, wherein the instructions, when executed by the processor, cause the electronic device (201) to:
when the first electronic device (201) is moved for alignment between the first coil and the second coil, display information indicating that the first electronic device (201) is normally mounted, on the display (260).

9. The electronic device (201) of any one of claims 1 to 8, wherein the instructions, when executed by the processor, cause the electronic device (201) to::
identify a temperature of the first electronic device (201), while wirelessly receiving the power from the second electronic device (202) through the power reception circuit (210), and
when the temperature is greater than a threshold temperature, display guide information for guiding movement of the mounted position of the first electronic device (201) for alignment between the first coil and the second coil, on the display (260).

10. The electronic device (201) of any one of claims 1 to 9, wherein the instructions, when executed by the processor, cause the electronic device (201) to:
when the display (260) is a rollable display, identify through the sensor (240) whether the rollable display is in an extended state or a retracted state, and
display, on the display (260), guide information for guiding mounting of the rollable display in the extended state or the retracted state on the second electronic device (202), based on a result of the identification.

11. A method of operating a first electronic device (201), the method comprising:
when the first electronic device (201) is mounted on a second electronic device (202), receiving identification information and, via a first coil included in the first electronic device (201), power from a second coil among a plurality of coils included in the second electronic device (202);
identifying a type of the second electronic device (202) and a position of the second coil, based on the identification information;
identifying, through a sensor (240) included in the first electronic device (201), a mounted state of the first electronic device (201) on the second electronic device (202), wherein the mounted state includes at least one of a folded state of the display, an unfolded state of the display, a vertical direction state of the first electronic device, a horizontal direction state of the first electronic device, an extended state of the display, or a retracted state of the display;
obtaining a first image representing the first electronic device (201) in its mounted state, based on the identified mounted state of the first electronic device (201);
obtaining a second image representing the second electronic device (202), based on the type of the second electronic device (202);and
displaying, on a display (260) included in the first electronic device (201), mounting information indicating a state in which the first electronic device (201) is mounted on the second electronic device (202) including the first image and the second image by overlapping the first image in an area of the second image, corresponding to a position at which the first electronic device (201) is mounted on the second electronic device (202).

12. The method of claim 11, wherein displaying the mounting information comprises:
displaying at least one coil image representing the at least one coil included in the second electronic device (202) by overlapping the at least one coil image on the second image; and
displaying a coil image representing the first coil by overlapping the coil image on the first image.

13. The method of any one of claims 11 to 12, further comprising:
wirelessly receiving power from the second electronic device (202) through the power reception circuit (210); and
when a magnitude of the power is less than a specified value, displaying guide information for guiding movement of a mounted position of the first electronic device (201) for alignment between the second coil and the first coil, on the display (260).

## Patentansprüche

1. Erste elektronische Vorrichtung (201), umfassend:
eine Stromempfangsschaltung (210), die eine erste Spule beinhaltet;
einen Sensor (240);
eine Anzeige (260);
einen Prozessor (220); und
einen Speicher (230), der Anweisungen speichert, wobei die Anweisungen, wenn sie durch den Prozessor ausgeführt werden, die erste elektronische Vorrichtung (201) zu Folgendem veranlassen:
wenn die erste elektronische Vorrichtung (201) an einer zweiten elektronischen Vorrichtung (202) angebracht ist, Empfangen von Identifikationsinformationen und, über die erste Spule, von Strom von einer zweiten Spule aus einer Vielzahl von Spulen, die in der zweiten elektronischen Vorrichtung (202) beinhaltet sind,
Identifizieren eines Typs der zweiten elektronischen Vorrichtung (202) und einer Position der zweiten Spule basierend auf den Identifikationsinformationen,
Identifizieren, durch den Sensor (240), eines Anbringungszustands der ersten elektronischen Vorrichtung (201) an der zweiten elektronischen Vorrichtung (202), wobei der Anbringungszustand mindestens einen von einem gefalteten Zustand der Anzeige, einem auseinandergefalteten Zustand der Anzeige, einem Senkrechtrichtungszustand der ersten elektronischen Vorrichtung, einem Waagerechtrichtungszustand der ersten elektronischen Vorrichtung, einem ausgezogenen Zustand der Anzeige oder einem eingeschobenen Zustand der Anzeige beinhaltet,
Erhalten eines ersten Bildes, das die erste elektronische Vorrichtung (201) in ihrem Anbringungszustand darstellt, basierend auf dem identifizierten Anbringungszustand der ersten elektronischen Vorrichtung (201),
Erhalten eines zweiten Bildes, das die zweite elektronische Vorrichtung (202) darstellt, basierend auf dem Typ der zweiten elektronischen Vorrichtung (202), und
Anzeigen, auf der Anzeige (260), von Anbringungsinformationen, die einen Zustand angeben, in dem die erste elektronische Vorrichtung (201) an der zweiten elektronischen Vorrichtung (202) angebracht ist, und die das erste Bild und das zweite Bild beinhalten, durch Legen des ersten Bildes über einen Bereich des zweiten Bildes, der einer Position entspricht, an der die erste elektronische Vorrichtung (201) an der zweiten elektronischen Vorrichtung (202) angebracht ist.

2. Elektronische Vorrichtung (201) nach Anspruch 1, wobei die Anweisungen, wenn sie durch den Prozessor ausgeführt werden, die elektronische Vorrichtung (201) zu Folgendem veranlassen:
Anzeigen mindestens eines Spulenbilds, das die mindestens eine in der zweiten elektronischen Vorrichtung (202) beinhaltete Spule darstellt, durch Legen des mindestens einen Spulenbilds über das zweite Bild, und
Anzeigen eines Spulenbildes, das die erste Spule darstellt, durch Legen des Spulenbildes über das ersten Bild.

3. Elektronische Vorrichtung (201) nach einem der Ansprüche 1 bis 2, wobei die Anweisungen, wenn sie durch den Prozessor ausgeführt werden, die elektronische Vorrichtung (201) zu Folgendem veranlassen:
drahtloses Empfangen von Strom von der zweiten elektronischen Vorrichtung (202) durch die Stromempfangsschaltung (210) und
wenn eine Größe des Stroms unter einem vorgegebenen Wert liegt, Anzeigen von Anleitungsinformationen zum Anleiten einer Verlagerung einer Anbringungsposition der ersten elektronischen Vorrichtung (201) zur Ausrichtung zwischen der zweiten Spule und der ersten Spule auf der Anzeige (260).

4. Elektronische Vorrichtung (201) nach einem der Ansprüche 1 bis 3, wobei die Anweisungen, wenn sie durch den Prozessor ausgeführt werden, die elektronische Vorrichtung (201) zu Folgendem veranlassen:
wenn durch den Sensor (240) identifiziert wird, dass sich die Anbringungsposition der ersten elektronischen Vorrichtung (201) verlagert hat, Anpassen einer Position des ersten Bildes basierend auf einer Verlagerungsrichtung und einer Verlagerungsentfernung der ersten elektronischen Vorrichtung (201).

5. Elektronische Vorrichtung (201) nach einem der Ansprüche 1 bis 4, wobei die Anweisungen, wenn sie durch den Prozessor ausgeführt werden, die elektronische Vorrichtung (201) zu Folgendem veranlassen:
Anzeigen, auf der Anzeige (260), von Anleitungsinformationen zum Anleiten einer Anbringung der ersten elektronischen Vorrichtung (201) in einem waagerechten Zustand oder einem senkrechten Zustand an der zweiten elektronischen Vorrichtung (202).

6. Elektronische Vorrichtung (201) nach einem der Ansprüche 1 bis 5, wobei die Anweisungen, wenn sie durch den Prozessor ausgeführt werden, die elektronische Vorrichtung (201) zu Folgendem veranlassen:
wenn es sich bei der ersten elektronischen Vorrichtung (201) um eine faltbare elektronische Vorrichtung handelt, Identifizieren durch den Sensor (240), ob sich die erste elektronische Vorrichtung (201) in einem auseinandergefalteten oder einem gefalteten Zustand befindet, und
Anzeigen, auf der Anzeige (260), von Anleitungsinformationen zum Anleiten einer Anbringung der ersten elektronischen Vorrichtung (201) in dem auseinandergefalteten Zustand oder dem gefalteten Zustand an der zweiten elektronischen Vorrichtung (202) basierend auf einem Ergebnis der Identifizierung.

7. Elektronische Vorrichtung (201) nach einem der Ansprüche 1 bis 6, wobei die Anweisungen, wenn sie durch den Prozessor ausgeführt werden, die elektronische Vorrichtung (201) zu Folgendem veranlassen:
Anzeigen von Objekten, die relative Positionen zwischen der ersten Spule und der zweiten Spule angeben, und
Anpassen von Positionen der Objekte entsprechend der Verlagerung der ersten elektronischen Vorrichtung (201).

8. Elektronische Vorrichtung (201) nach einem der Ansprüche 1 bis 7, wobei die Anweisungen, wenn sie durch den Prozessor ausgeführt werden, die elektronische Vorrichtung (201) zu Folgendem veranlassen:
wenn die erste elektronische Vorrichtung (201) zur Ausrichtung zwischen der ersten Spule und der zweiten Spule verlagert wird, Anzeigen von Informationen, die angeben, dass die erste elektronische Vorrichtung (201) ordnungsgemäß angebracht ist, auf der Anzeige (260).

9. Elektronische Vorrichtung (201) nach einem der Ansprüche 1 bis 8, wobei die Anweisungen, wenn sie durch den Prozessor ausgeführt werden, die elektronische Vorrichtung (201) zu Folgendem veranlassen:
Identifizieren einer Temperatur der ersten elektronischen Vorrichtung (201), während der Strom von der zweiten elektronischen Vorrichtung (202) durch die Stromempfangsschaltung (210) drahtlos empfangen wird, und
wenn die Temperatur einen Temperaturschwellenwert überschreitet, Anzeigen von Anleitungsinformationen zum Anleiten einer Verlagerung der Anbringungsposition der ersten elektronischen Vorrichtung (201) zur Ausrichtung zwischen der ersten Spule und der zweiten Spule auf der Anzeige (260).

10. Elektronische Vorrichtung (201) nach einem der Ansprüche 1 bis 9, wobei die Anweisungen, wenn sie durch den Prozessor ausgeführt werden, die elektronische Vorrichtung (201) zu Folgendem veranlassen:
wenn es sich bei der Anzeige (260) um eine aufrollbare Anzeige handelt, Identifizieren durch den Sensor (240), ob sich die aufrollbare Anzeige in einem ausgezogenen Zustand oder einem eingeschobenen Zustand befindet, und
Anzeigen, auf der Anzeige (260), von Anleitungsinformationen zum Anleiten einer Anbringung der aufrollbaren Anzeige im ausgezogenen Zustand oder im eingeschobenen Zustand an der zweiten elektronischen Vorrichtung (202), basierend auf dem Ergebnis der Identifizierung.

11. Verfahren zum Betreiben einer ersten elektronischen Vorrichtung (201), wobei das Verfahren Folgendes umfasst:
wenn die erste elektronische Vorrichtung (201) an einer zweiten elektronischen Vorrichtung (202) angebracht ist, Empfangen von Identifikationsinformationen und, über eine erste Spule, die in der ersten elektronischen Vorrichtung (201) beinhaltet ist, von Strom von einer zweiten Spule aus einer Vielzahl von Spulen, die in der zweiten elektronischen Vorrichtung (202) beinhaltet sind;
Identifizieren eines Typs der zweiten elektronischen Vorrichtung (202) und einer Position der zweiten Spule basierend auf den Identifikationsinformationen;
Identifizieren, durch einen Sensor (240), der in der ersten elektronischen Vorrichtung (201) beinhaltet ist, eines Anbringungszustands der ersten elektronischen Vorrichtung (201) an der zweiten elektronischen Vorrichtung (202), wobei der Anbringungszustand mindestens einen von einem gefalteten Zustand der Anzeige, einem auseinandergefalteten Zustand der Anzeige, einem Senkrechtrichtungszustand der ersten elektronischen Vorrichtung, einem Waagerechtrichtungszustand der ersten elektronischen Vorrichtung, einem ausgezogenen Zustand der Anzeige oder einem eingeschobenen Zustand der Anzeige beinhaltet;
Erhalten eines ersten Bildes, das die erste elektronische Vorrichtung (201) in ihrem Anbringungszustand darstellt, basierend auf dem identifizierten Anbringungszustand der ersten elektronischen Vorrichtung (201);
Erhalten eines zweiten Bildes, das die zweite elektronische Vorrichtung (202) darstellt, basierend auf dem Typ der zweiten elektronischen Vorrichtung (202); und
Anzeigen, auf einer Anzeige (260), die in der ersten elektronischen Vorrichtung (201) beinhaltet ist, von Anbringungsinformationen, die einen Zustand angeben, in dem die erste elektronische Vorrichtung (201) an der zweiten elektronischen Vorrichtung (202) angebracht ist, und die das erste Bild und das zweite Bild beinhalten, durch Legen des ersten Bildes über einen Bereich des zweiten Bildes, der einer Position entspricht, an der die erste elektronische Vorrichtung (201) an der zweiten elektronischen Vorrichtung (202) angebracht ist.

12. Verfahren nach Anspruch 11, wobei Anzeigen der Anbringungsinformationen Folgendes umfasst:
Anzeigen mindestens eines Spulenbilds, das die mindestens eine in der zweiten elektronischen Vorrichtung (202) beinhaltete Spule darstellt, durch Legen des mindestens einen Spulenbilds über das zweite Bild; und
Anzeigen eines Spulenbildes, das die erste Spule darstellt, durch Legen des Spulenbildes über das erste Bild.

13. Verfahren nach einem der Ansprüche 11 bis 12, ferner umfassend:
drahtloses Empfangen von Strom von der zweiten elektronischen Vorrichtung (202) durch die Stromempfangsschaltung (210); und
wenn eine Größe des Stroms unter einem vorgegebenen Wert liegt, Anzeigen von Anleitungsinformationen zum Anleiten einer Verlagerung einer Anbringungsposition der ersten elektronischen Vorrichtung (201) zur Ausrichtung zwischen der zweiten Spule und der ersten Spule auf der Anzeige (260).

## Revendications

1. Premier dispositif électronique (201), comprenant :
un circuit de réception d'énergie (210) comprenant une première bobine ;
un capteur (240) ;
un affichage (260) ;
un processeur (220) ; et
une mémoire (230) stockant des instructions, les instructions, lorsqu'elles sont exécutées par le processeur, amenant le premier dispositif électronique (201) à :
lorsque le premier dispositif électronique (201) est monté sur un deuxième dispositif électronique (202), recevoir des informations d'identification et, via la première bobine, l'énergie provenant d'une deuxième bobine parmi une pluralité de bobines incluses dans le deuxième dispositif électronique (202),
identifier un type du deuxième dispositif électronique (202) et une position de la deuxième bobine, en se basant sur les informations d'identification,
identifier, par le capteur (240), un état monté du premier dispositif électronique (201) sur le deuxième dispositif électronique (202), dans lequel l'état monté comprend au moins l'un d'un état replié de l'affichage, d'un état déplié de l'affichage, d'un état de direction verticale du premier dispositif électronique, d'un état de direction horizontale du premier dispositif électronique, d'un état déployé de l'affichage ou d'un état rétracté de l'affichage,
obtenir une première image représentant le premier dispositif électronique (201) dans son état monté, en se basant sur l'état monté identifié du premier dispositif électronique (201),
obtenir une deuxième image représentant le deuxième dispositif électronique (202), en se basant sur le type du deuxième dispositif électronique (202), et
afficher, sur l'affichage (260), des informations de montage indiquant un état dans lequel le premier dispositif électronique (201) est monté sur le deuxième dispositif électronique (202), comprenant la première image et la deuxième image en superposant la première image dans une zone de la deuxième image, correspondant à une position au niveau de laquelle le premier dispositif électronique (201) est monté sur le deuxième dispositif électronique (202).

2. Dispositif électronique (201) selon la revendication 1, dans lequel les instructions sont exécutées par le processeur amènent le dispositif électronique (201) à :
afficher au moins une image de bobine représentant l'au moins une bobine incluse dans le deuxième dispositif électronique (202) en superposant l'au moins une image de bobine sur la deuxième image, et
afficher une image de bobine représentant la première bobine en superposant l'image de bobine à la première image.

3. Dispositif électronique (201) selon l'une quelconque des revendications 1 à 2, dans lequel les instructions, lorsqu'elles sont exécutées par le processeur, amènent le dispositif électronique à :
recevoir de l'énergie sans fil provenant du deuxième dispositif électronique (202) par l'intermédiaire du circuit de réception d'énergie (210), et
lorsque une amplitude de l'énergie est inférieure à une valeur spécifiée, afficher sur l'affichage (260) des informations de guidage destinées à guider le déplacement d'une position montée du premier dispositif électronique (201) en vue de l'alignement entre la deuxième bobine et la première bobine.

4. Dispositif électronique (201) selon l'une quelconque des revendications 1 à 3, dans lequel les instructions, lorsqu'elles sont exécutées par le processeur, amènent le dispositif électronique à :
lorsqu'il est identifié, par l'intermédiaire du capteur (240), que la position montée du premier dispositif électronique (201) est déplacée, ajuster une position de la première image sur la base d'une direction de déplacement et d'une distance de déplacement du premier dispositif électronique (201).

5. Dispositif électronique (201) selon l'une quelconque des revendications 1 à 4, dans lequel des instructions, lorsqu'elles sont exécutées par le processeur, amènent le dispositif électronique à :
afficher, sur l'affichage (260), des informations de guidage permettant de guider le montage du premier dispositif électronique (201) dans un état horizontal ou un état vertical sur le deuxième dispositif électronique (202).

6. Dispositif électronique (201) selon l'une quelconque des revendications 1 à 5, dans lequel des instructions, lorsqu'elles sont exécutées par le processeur, amènent le dispositif électronique à :
lorsque le premier dispositif électronique (201) est un dispositif électronique pliable, identifier, par l'intermédiaire du capteur (240), si le premier dispositif électronique (201) se trouve dans un état déplié ou dans un état plié, et
afficher, sur l'affichage (260), des informations destinées à guider le montage du premier dispositif électronique (201) à l'état déplié ou à l'état replié sur le deuxième dispositif électronique (202), en se basant sur un résultat de l'identification.

7. Dispositif électronique (201) selon l'une quelconque des revendications 1 à 6, dans lequel les instructions, lorsqu'elles sont exécutées par le processeur, amènent le dispositif électronique à :
afficher des objets indiquant des positions relatives entre la première bobine et la deuxième bobine, et
ajuster la position des objets en fonction du mouvement du premier dispositif électronique (201).

8. Dispositif électronique (201) selon l'une quelconque des revendications 1 à 7, dans lequel les instructions, lorsqu'elles sont exécutées par le processeur, amènent le dispositif électronique à :
lorsque le premier dispositif électronique (201) est déplacé en vue d'alignement entre la première bobine et la deuxième bobine, afficher sur l'affichage (260) des informations indiquant que le premier dispositif électronique (201) est normalement monté.

9. Dispositif électronique (201) selon l'une quelconque des revendications 1 à 8, dans lequel les instructions, lorsqu'elles sont exécutées par le processeur, amènent le dispositif électronique (201) à :
déterminer une température du premier dispositif électronique (201), tout en recevant sans fil l'énergie provenant du deuxième dispositif électronique (202) par l'intermédiaire du circuit de réception d'énergie (210), et
lorsque la température dépasse une température seuil, afficher sur l'affichage (260) des instructions destinées à guider le déplacement de la position montée du premier dispositif électronique (201) en vue de l'alignement entre la première bobine et la deuxième bobine.

10. Dispositif électronique (201) selon l'une quelconque des revendications 1 à 9, dans lequel les instructions, lorsqu'elles sont exécutées par le processeur, amènent le dispositif électronique à :
lorsque l'affichage (260) est un affichage enroulable, identifier, par l'intermédiaire du capteur (240), si l'affichage enroulable se trouve dans un état déployé ou dans un état rétracté, et
afficher, sur l'affichage (260), des informations de guidage destinées à guider le montage de l'affichage enroulable à l'état déployé ou à l'état rétracté sur le deuxième dispositif électronique (202), en se basant sur un résultat de l'identification.

11. Procédé de fonctionnement d'un premier dispositif électronique (201), le procédé comprenant :
lorsque le premier dispositif électronique (201) est monté sur un deuxième dispositif électronique (202), recevoir des informations d'identification et, par l'intermédiaire d'une première bobine incluse dans le premier dispositif électronique (201), de l'énergie provenant d'une deuxième bobine parmi une pluralité de bobines incluses dans le deuxième dispositif électronique (202) ;
identifier un type du deuxième dispositif électronique (202) et une position de la deuxième bobine, en se basant sur les informations d'identification ;
identifier, par l'intermédiaire d'un capteur (240) inclus dans le premier dispositif électronique (201), un état monté du premier dispositif électronique (201) sur le deuxième dispositif électronique (202), dans lequel l'état monté comprend au moins l'un d'un état replié de l'affichage, d'un état déplié de l'affichage, d'un état de direction verticale du premier dispositif électronique, d'un état de direction horizontale du premier dispositif électronique, d'un état déployé de l'affichage ou d'un état rétracté de l'affichage ;
obtenir une première image représentant le premier dispositif électronique (201) dans son état monté, en se basant sur l'état monté identifié du premier dispositif électronique (201) ;
obtenir une deuxième image représentant le deuxième dispositif électronique (202), en se basant sur le type du deuxième dispositif électronique (202) ; et
afficher, sur un affichage (260) inclus dans le premier dispositif électronique (201), des informations de montage indiquant un état dans lequel le premier dispositif électronique (201) est monté sur le deuxième dispositif électronique (202), comprenant la première image et la deuxième image en superposant la première image dans une zone de la deuxième image, correspondant à une position au niveau de laquelle le premier dispositif électronique (201) est monté sur le deuxième dispositif électronique (202).

12. Procédé selon la revendication 11, dans lequel l'affichage des informations de montage comprend :
afficher au moins une image de bobine représentant l'au moins une bobine incluse dans le deuxième dispositif électronique (202) en superposant l'au moins une image de bobine sur la deuxième image ; et
afficher une image de bobine représentant la première bobine en superposant l'image de bobine à la première image.

13. Procédé selon l'une des revendications 11 à 12, comprenant en outre :
recevoir de l'énergie sans fil provenant du deuxième dispositif électronique (202) par l'intermédiaire du circuit de réception d'énergie (210) ; et
lorsque une amplitude de l'énergie est inférieure à une valeur spécifiée, afficher sur l'affichage (260) des informations de guidage destinées à guider le déplacement d'une position montée du premier dispositif électronique (201) en vue de l'alignement entre la deuxième bobine et la première bobine.
